(19) Europäisches Patentamt
European Patent Office
Office européen des brevets

(11) **EP 2 985 857 B1**

(12) **EUROPEAN PATENT SPECIFICATION**

(45) Date of publication and mention
of the grant of the patent:
**23.05.2018 Bulletin 2018/21**

(21) Application number: **14782091.4**

(22) Date of filing: **31.03.2014**

(51) Int Cl.:
*H02J 9/06* *(2006.01)*     *H01M 10/42* *(2006.01)*
*H01M 10/44* *(2006.01)*     *H02J 7/00* *(2006.01)*
*H02J 7/02* *(2016.01)*     *H02J 7/35* *(2006.01)*
*H02J 5/00* *(2016.01)*

(86) International application number:
**PCT/JP2014/001896**

(87) International publication number:
**WO 2014/167802 (16.10.2014 Gazette 2014/42)**

(54) **STORAGE BATTERY MANAGEMENT SYSTEM AND STORAGE BATTERY MANAGEMENT METHOD**

SPEICHERBATTERIEVERWALTUNGSSYSTEM UND
SPEICHERBATTERIEVERWALTUNGSVERFAHREN

SYSTÈME DE GESTION D'ACCUMULATEURS ÉLECTRIQUES ET PROCÉDÉ DE GESTION
D'ACCUMULATEURS ÉLECTRIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2013 JP 2013084235**

(43) Date of publication of application:
**17.02.2016 Bulletin 2016/07**

(73) Proprietor: **Panasonic Intellectual Property
Management Co., Ltd.
Osaka-shi, Osaka 540-6207 (JP)**

(72) Inventors:
• **YOSHITAKE, Akira
Osaka-shi, Osaka 540-6207 (JP)**
• **KIKUCHI, Akihiro
Osaka-shi, Osaka 540-6207 (JP)**
• **MATSUDA, Yasuhiro
Osaka-shi, Osaka 540-6207 (JP)**
• **KATOU, Ichirou
Osaka-shi, Osaka 540-6207 (JP)**
• **KINOMURA, Masahiro
Osaka-shi, Osaka 540-6207 (JP)**
• **NAKAHARA, Masayuki
Osaka-shi, Osaka 540-6207 (JP)**

(74) Representative: **Appelt, Christian W.
Boehmert & Boehmert
Anwaltspartnerschaft mbB
Pettenkoferstrasse 22
80336 München (DE)**

(56) References cited:
WO-A1-2011/043172     FR-A1- 2 797 722
GB-A- 2 465 469       JP-A- H03 226 233
JP-A- 2000 116 014    JP-A- 2001 095 163
JP-A- 2004 147 477    JP-A- 2008 118 790
JP-A- 2010 124 575    JP-A- 2012 205 488
US-A1- 2011 089 760   US-A1- 2012 169 291

## Description

TECHNICAL FIELD

The present invention relates to a management system of a storage battery, and a method for managing the storage battery.

BACKGROUND ART

Various types of systems that use storage batteries such as rechargeable batteries have been developed as sources for supplying power. In such type of system, for example, a storage battery is used as an uninterruptable power supply for blackouts or as a power supply that compensates for fluctuations in the output power of a photovoltaic facility (e.g., patent document 1).

In such systems, each storage battery includes, for example, a converter that functions to convert voltage and power. The converter monitors the charge power amount of the corresponding storage battery and executes control for increasing the charge amount of the storage battery when the charge power amount becomes smaller than a specified value. The converter also monitors the charge power amount of the corresponding storage battery to execute control for decreasing the charge amount of the storage battery when the charge power amount becomes greater than or equal to the specified value. The charging and discharging of the storage battery are managed in this manner.

For example, when detecting a blackout of a system power supply, the converter supplies a load with the power accumulated in the storage battery.

PRIOR ART DOCUMENT

PATENT DOCUMENT

Patent Document 1: Japanese Laid-Open Patent Publication No. 2007-60796

US 2011/089760 A1 describes a system for managing a power system with a plurality of power components that includes power source components and power consumption components including a central power bus, a plurality of adaptable connectors that each electrically couple to a power component and to the central power bus, and a control processor that receives the state of each power component from the respective adaptable connector and is configured to balance the voltage and current output from each power source component to provide a desired power to a power consumption component based on the received states.

GB 2 465 469 A describes a power storage control system that comprises a plurality of power storage devices 1011, 1012-101N, each comprising one or more storage elements connected in series, and a plurality of power conversion devices 1041, 1042-104N, where the plural units of power storage devices and the plural units of power conversion devices are connected in parallel to each other. A power storage monitoring device is associated with each power storage device for monitoring the temperature 1061, 1062-106N of the respective power storage device. A controller 105 receives the temperature information from the power storage monitoring devices and outputs charge/discharge current commands to the power conversion devices.

FR 2 797 722 A1 describes an apparatus comprising n accumulators placed in parallel, charging current controller, checking current going through charging element, accumulator current controller for each accumulator, n converter circuits with outputs respectively linked in series to each accumulator, and series of n stack circuits. Each stack circuit generates output control signal linked to a separate circuit amongst n converter circuits so as to control accumulator current of each accumulator in which each accumulator shares charging current.

SUMMARY OF THE INVENTION

PROBLEM TO BE SOLVED BY THE INVENTION

The conventional system manages the charging and discharging of storage batteries in a limited manner. For example, the charge power amount is maintained at the same specified value in a quantity of storage batteries. Thus, there is room for improvement when effectively using the storage battery.

It is an object of the present invention to provide a storage battery management system and a storage battery management method that allow for further efficient management of the charging and discharging of a storage battery.

MEANS FOR SOLVING THE PROBLEM

One aspect of the present invention is a storage battery management system including a plurality of storage batteries and a plurality of converters respectively controlling input currents of the storage batteries. The input currents are at least either one of charging currents and discharging currents. The storage battery management system includes a controller that calculates a total current command value for controlling the input currents of the storage batteries. A distributor generates a plurality of input current command values from the total current command value calculated by the controller. The distributor assigns the input current command values to the converters in accordance with a preset rule and provides the input current command values to the converters.

Preferably, in the above configuration, the total current command value is one of different types of total current command values. The controller includes a plurality of control functions that respectively generates the different types of total current command values, and a switch that switches the control functions. The switch switches the control functions in accordance with a control function requested for the storage batteries.

Preferably, in the above configuration, the control functions include at least two of an output voltage control function that controls an output voltage of the storage batteries to be constant, a reverse flow restriction function that restricts reverse flow when the storage batteries operate in coordination with a system power supply, a constant current charging control function that charges the storage battery with a constant current, and a rapid charging function that controls rapid charging of the storage battery. The distributor receives a total current command value generated by one of the control functions, generates a plurality of input current command values assigned to the converters from the total current command value, and provides the input current command values to the converters.

Preferably, in the above configuration, each of the converters includes a bidirectional converter having a bidirectional voltage converting function. The converters are respectively connected to the storage batteries. Sets of the storage battery and the converter, which are connected to each other, are connected in parallel.

Preferably, in the above configuration, the preset rule includes a rule based on a quantity of storage batteries. The distributor divides the total current command value by a set quantity value, which is the quantity of storage batteries, to determine the input current command values that are assigned.

Preferably, in the above configuration, the distributor sets the set quantity value to an initial quantity of the storage batteries, and updates the set quantity value by excluding the quantity of storage batteries that are in a stopped state from the initial quantity of storage batteries when determining that there is a storage battery in the stopped state.

Preferably, the distributor sets the set quantity value to an initial quantity of the storage batteries, and updates the set quantity value by excluding the quantity of storage batteries that are in an abnormal state from the initial quantity of storage batteries when determined that there is a storage battery in the abnormal state.

Preferably, in the above configuration, the preset rule includes a rule based on charge rates of the storage batteries. The distributor determines a distribution factor of the total current command value in accordance with the charge rates of the storage batteries.

Preferably, in the above configuration, when input currents of the storage batteries are charging currents flowing to the storage batteries, the distributor assigns the input current command values respectively to the converters from the total current command value at a reciprocal ratio of the charge rates of the storage batteries. When input currents of the storage batteries are discharging currents flowing from the storage batteries, the distributor assigns the input current command values respectively to the converters from the total current command value at a ratio of the charge rates of the storage batteries.

Preferably, in the above configuration, the distributor assigns, to a converter corresponding to a storage battery having a charge rate that has become an upper limit value, an input current command value that sets a limit current for charging to zero. Further, the distributor assigns, to a converter corresponding to a storage battery having a charge rate that has become a lower limit value, an input current command value that sets a limit current for discharging to zero.

Preferably, in the above configuration, the preset rule includes a rule based on voltages of the storage batteries. The distributor generates, from the total current command value, a plurality of input current command values assigned to the converters in accordance with voltages of the storage batteries and provides the input current command values respectively to the converters.

Preferably, in the above configuration, when input currents of the storage batteries are charging currents flowing to the storage batteries, the distributor assigns the input current command values, from the total current command value, respectively to the converters at a reciprocal ratio of the voltages of the storage batteries. When input currents of the storage batteries are discharging currents flowing from the storage batteries, the distributor assigns the input current command values, from the total current command value, to the converters at a ratio of the voltages of the storage batteries.

Preferably, in the above configuration, when voltage of at least one of the storage batteries becomes a predetermined voltage, the distributor provides an input current command value for constant voltage charging to a converter corresponding to a storage battery having the predetermined voltage, and the distributor distributes the total current command value to a converter corresponding to the storage batteries excluding the storage battery having the predetermined voltage.

Preferably, in the above configuration, the preset rule includes a rule based on a total charging and discharging power amount, which is a total value of power amounts charged to the storage batteries or a total value of power amounts discharged from the storage batteries. The distributor generates, from the total current command value, a plurality of input current command values assigned to the converters in accordance with the total charging and discharging power amount, and the distributor supplies the input current command values respectively to the converters.

Preferably, in the above configuration, the distributor assigns the input current command values, from the total current command value, respectively to the converters at a ratio or a reciprocal ratio of a plurality of total charging and discharging power amounts of the storage batteries.

Preferably, in the above configuration, the preset rule includes a rule based on tolerable current values of the storage batteries.

Preferably, in the above configuration, the distributor assigns the input current command values to the converters from the current command value at a ratio or a reciprocal ratio of tolerable current values of the storage batteries.

Preferably, in the above configuration, when at least one of the storage batteries is charged at a constant voltage, the distributor provides the converter corresponding to the storage battery charged at the constant voltage with an input current command value indicating a constant current value. The distributor assigns a difference of the provided input current command value and the total current command value to the converters of the storage batteries, excluding the storage battery charged at the constant voltage.

Preferably, in the above configuration, the preset rule includes a rule based on temperature characteristics of the storage batteries.

Preferably, in the above configuration, the distributor holds a table indicating a relationship of temperatures, at which a plurality of tolerable currents of the storage batteries are respectively specified for a plurality of temperature regions, and the tolerable currents. The distributor assigns the input current command values, from the total current command value, respectively to the converters at a ratio of the tolerable currents indicated in the table.

Preferably, in the above configuration, the storage battery management system further includes an abnormality notifying unit that issues an abnormality notification when a tolerable value of an input current specified for the storage batteries exceeds the total current command value.

Preferably, in the above configuration, the storage battery management system further includes a solar battery system including a plurality of solar batteries and a plurality of converters that convert power generated by the solar batteries. The storage batteries perform at least either one of accumulating surplus power from the solar batteries and discharging power accumulated in the storage batteries when a power generation amount of the solar batteries is insufficient.

A further aspect of the present invention is a storage battery management method for controlling input currents of a plurality of storage batteries respectively with a plurality of converters. The input currents are at least one of charging currents and discharging currents. The method includes calculating a total current command value for a plurality of storage batteries that are subject to management, assigning a plurality of current command values from the calculated total current command value to the converters in accordance with a preset rule, and generating a plurality of input current command values respectively indicating the assigned current command values, and providing the input current command values to the converters.

EFFECT OF THE INVENTION

The charging and discharging of the storage battery may be managed with further efficiency.

BRIEF DESCRIPTION OF THE DRAWINGS

Fig. 1 is a block schematic diagram showing the configuration of a storage battery management system according to a first embodiment of the present invention.

Fig. 2 is a flowchart showing one example of the procedures for distributing a total current command value corresponding to the quantity of storage batteries and the stopped state in a first example of a storage battery management system and storage battery management method according to the present invention.

Fig. 3 is a flowchart showing one example of the procedures for distributing the total current command value corresponding to the quantity of storage batteries and the abnormal state in the first example of the storage battery management system and storage battery management method according to the present invention.

Fig. 4 is a flowchart showing one example of the procedures for distributing the total current command value corresponding to the SOC of the storage battery in a second example of the storage battery management system and storage battery management method according to the present invention.

Fig. 5 is a block diagram showing one example of a distribution mode of the total current command value when the SOC is balanced in storage batteries in the second example of the storage battery management system and storage battery management method according to the present invention.

Fig. 6 is a block diagram showing one example of a distribution mode of the total current command value during charging when the SOC is imbalanced in storage batteries in the second example of the storage battery management system and storage battery management method according to the present invention.

Fig. 7 is a block diagram showing one example of a distribution mode of the total current command value during discharging when the SOC is imbalanced in storage batteries in the second example of the storage battery management system and storage battery management method according to the present invention.

Fig. 8 is a flowchart showing one example of the procedures for distributing the total current command value corresponding to an upper limit value and a lower limit value of the SOC of a storage battery in a third example of the storage battery management system and storage battery management method according to the present invention.

Fig. 9 is a flowchart showing one example of the procedures for distributing the total current command value corresponding to the voltage of a storage battery in a fourth example of the storage battery management system and storage battery management method according to the present invention.

Fig. 10 is a flowchart showing one example of the procedures for distributing the total current command value corresponding to whether or not constant voltage control is executed in a fifth example of the storage battery management system and storage battery management method according to the present invention.

Fig. 11 is a flowchart showing one example of the procedures for distributing the total current command value corresponding to a ratio of the total charging and discharging power amounts in a sixth example of the storage battery management system and storage battery management method according to the present invention.

Fig. 12 is a flowchart showing one example of the procedures for distributing the total current command value corresponding to a reciprocal ratio of the total charging and discharging power amounts in a seventh example of the storage battery management method according to the present invention.

Fig. 13 is a chart showing one example of a tolerable current value specified for each type of storage battery in an eighth example of the storage battery management system and storage battery management method according to the present invention.

Fig. 14 is a flowchart showing one example of the procedures for distributing the total current command value corresponding to a ratio of the tolerable current values in the eighth example of the storage battery management system and storage battery management method according to the present invention.

Fig. 15 is a flowchart showing one example of the procedures for distributing the total current command value corresponding to a number of constant voltage control subjects in a ninth example of the storage battery management system and storage battery management method according to the present invention.

Fig. 16 is a graph showing the temperature characteristics of a storage battery in a tenth example of the storage battery management system and storage battery management method according to the present invention.

Fig. 17 is a flowchart showing one example of the procedures for distributing the total current command value corresponding to a tolerable current value obtained from the temperature characteristics of the storage battery in the tenth example of the storage battery management system and storage battery management method according to the present invention.

Fig. 18 is a block schematic diagram showing the configuration of the management system according to a second embodiment of the present invention.

Fig. 19 is a flowchart showing one example of the procedures for switching the control function in the second embodiment.

Fig. 20 is a block schematic diagram showing the configuration of a management system according to a third embodiment of the present invention.

Fig. 21 is a block schematic diagram showing the configuration of a management system according to a fourth embodiment of the present invention.

## EMBODIMENTS OF THE INVENTION

### First Embodiment

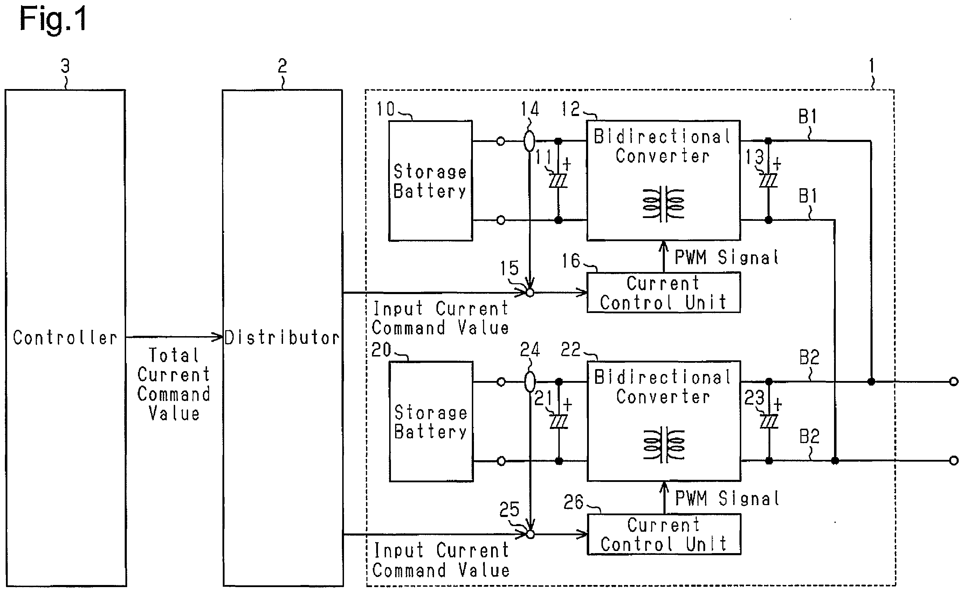

A first embodiment of a storage battery management system and a storage battery management method according to the present invention will now be described with reference to Figs. 1 to 17.

As shown in Fig. 1, a storage battery system 1 to which the storage battery management system and storage battery management method of the first embodiment is applied includes, for example, first and second storage batteries 10, 20, which are two storage batteries connected in parallel.

The first and second storage batteries 10, 20 are, for example, configured by a rechargeable battery that can be charged and discharged. A first bidirectional converter 12 for controlling charging and discharging is connected to the first storage battery 10 via a capacitor 11. A capacitor 13 is arranged at the output of the first bidirectional converter 12. A second bidirectional converter 22 for controlling charging and discharging is connected to the second storage battery 20 via a capacitor 21. A capacitor 23 is arranged at the output of the second bidirectional converter 22.

Each of the first and second bidirectional converters 12, 22 is, for example, a DC/DC converter that can convert voltage in two directions including a charging direction and a discharging direction. Each of the first and second bidirectional converters 12, 22 is configured by, for example, a step-up/step-down coil. Each of the first and second bidirectional converters 12, 22 increases or decreases the voltage in correspondence with an input PWM signal.

A bus B1 for supplying output power to a load is arranged at the output of the first bidirectional converter 12. In the same manner, a bus B2 for supplying output power to the load is arranged at the output of the second bidirectional converter 22. A distal end of the bus B1 is connected to an intermediate portion of the bus B2. Thus, the output of the first bidirectional converter 12 and the output of the second bidirectional converter 22 are connected in parallel.

The storage battery system 1 includes a current sensor 14, which is arranged between the first storage battery 10 and the first bidirectional converter 12, and a current sensor 24, which is arranged between the second storage battery 20 and the second bidirectional converter 22. The current sensor 14 detects the input current of the first storage battery 10. For example, the current sensor 14 detects the discharging current supplied from the first storage battery 10 to the first bidirectional converter 12 when the first storage battery 10 is discharged. The current sensor 14 detects the charging current supplied to the first storage battery 10 when the first storage battery 10 is charged. The current sensor 24 detects the input current of the second storage battery 20. For example, the current sensor 24 detects the discharging current supplied from the second storage battery 20 to the second bidirectional converter 22 when the second storage battery 20 is discharged. The current sensor 24 detects the charging current supplied to the second storage battery 20 when the second storage battery 20 is charged.

In the first embodiment, the current in the charging direction and the current in the discharging direction detected by each of the current sensors 14, 24 is referred to as the input current of the corresponding first and second storage batteries 10, 20.

The storage battery system 1 includes a comparator 15, which compares the input current with an input current command value indicating a control command value for controlling the input current of the first storage battery 10, and a comparator 25, which compares an input current with an input current command value indicating a control command value for controlling the input current of the second storage battery 20. When the input current command value is provided from a distributor 2 that assigns the input current command value, each of the comparator 15, 25 compares the input current command value and the input current. The storage battery system 1 includes a current control unit 16 and a current control unit 26. The current control unit 16 receives a signal indicating the comparison result from the comparator 15 and executes current control based on the comparison result.

For example, the current control unit 16 generates a PWM signal for driving the first bidirectional converter 12 so that the input current conforms to the input current command value based on the comparison result. The current control unit 16 provides the generated PWM signal to the corresponding first bidirectional converter 12. The current control unit 26 receives a signal indicating the comparison result from the comparator 25 and executes current control based on the comparison result. For example, the current control unit 26 generates a PWM signal for driving the second bidirectional converter 22 so that the input current conforms to the input current command value based on the comparison result. The current control unit 26 provides the generated PWM signal to the corresponding second bidirectional converter 22. In each of the bidirectional converter 12, 22, the increased or decreased amount of voltage thus changes according to the PWM signal. As a result, the output of each of the bidirectional converter 12, 22 changes according to the increased or decreased amount of voltage. When the output of each bidirectional converter 12, 22 changes, the input current of the corresponding first and second storage batteries 10, 20 is adjusted to conform to the input current command value.

The storage battery management system and the storage battery management method of the present embodiment include a controller 3 for generating the input current command value for the entire storage battery system 1, that is, a total current command value, which is the total command value of the input current command value. The controller 3 generates a total current command value for controlling the total power amount of the first and second storage batteries 10, 20 configuring the storage battery system 1. The total current command value is calculated, for example, as a value that adjusts the SOC (state of charge), which is the charge rate of the first and second storage batteries 10, 20, to a specified SOC. After calculating the total current command value, the controller 3 provides the calculated total current command value to the distributor 2.

The distributor 2 functions to distribute the total current command value based on a preset rule. When the total current command value is provided to the distributor 2, the distributor 2 distributes the total current command value based on the preset rule.

In the example herein, the two input current command values are assigned to the first and second storage batteries 10, 20 from the total current command value based on the preset rule. The distributor 2 determines an output destination of the assigned input current command value based on the preset rule. After determining the output destination of the input current command value, the distributor 2 supplies the input current command value to the determined output destination. Thus, the same controller 3 uses the same generated total current command value to assign the first input current command value to the first bidirectional converter 12 and assign the second input current command value to the second bidirectional converter 22. The input currents of the first and second storage batteries 10, 20 are adjusted to conform to the input current command value by comparing the current values corresponding to the assigned input current command value and generating the PWM signal.

Examples of the first embodiment will now be described below.

First example

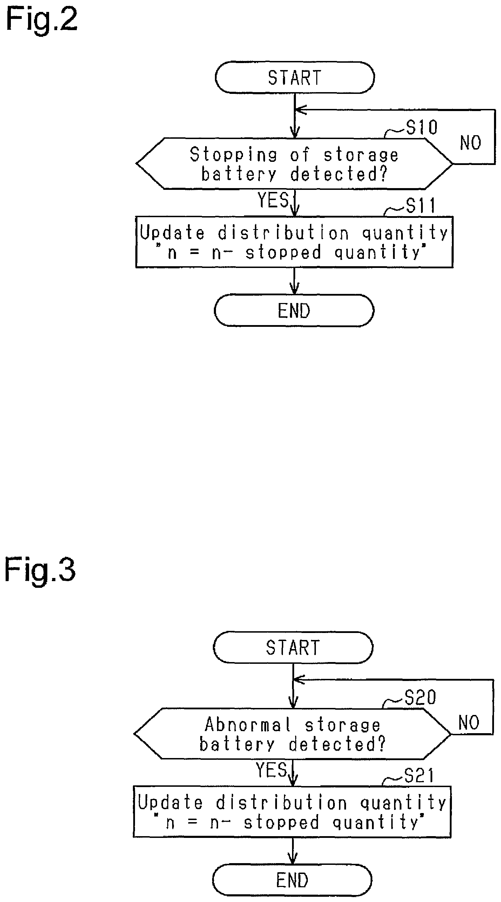

A first example, which is an application example of the first embodiment, will now be described with reference to Figs. 2 and 3.

In the first example, a rule in which the total current command value is equally distributed by the set value "n" of the quantity of storage batteries 10, 20 is specified as the preset rule.

Thus, if the storage battery system 1 includes two storage batteries and the total current command value is "If," the two assigned input current command values "If1" and "If2" are expressed by the equations shown below.

$$If1 = If \cdot 1/2, \quad If2 = If \cdot 1/2$$

If the storage battery system 1 includes three storage batteries and the total current command value is "If," the three assigned input current command values "If1," "If2," and "If3" are expressed by the equations shown below.

$$If1 = If \cdot 1/3, \quad If2 = If \cdot 1/3, \quad If3 = If \cdot 1/3$$

In the first example, the set value "n" of the quantity of storage batteries, to which an initial total quantity of storage batteries is set, is updated when the stopping or abnormality of the storage batteries 10, 20 is detected. A state in which the storage batteries 10, 20 are stopped is, for example, when charging or discharging is no longer performed. A state in which the storage batteries 10, 20 are abnormal is, for example, when the output or the temperature of the storage batteries 10, 20 exceeds a specified value. Furthermore, the stopping and abnormality of the storage batteries 10, 20 are detected when the value of the current detected by the current sensors 14, 24 is, for example, continuously outside a predetermined current range.

The procedures for distributing the total current command value of the first example will now be described with reference to Figs. 2 and 3.

As shown in Fig. 2, for example, when detecting that the first storage battery 10 has been stopped (step S10), the quantity of first storage batteries 10 is subtracted from a set quantity value "n," which is set to the initial total quantity of storage batteries. The quantity after the subtraction of the first storage batteries 10 is updated as the quantity of storage batteries used for the distribution of the total current command value (step S11).

Thus, the updated set quantity value "n" becomes "1." Therefore, the distributor 2 supplies all of the total current command values provided from the controller 3 to the comparator 25 of the second storage battery 20. Thus, in the storage battery system 1, even though the first storage battery 10 is stopped, the second storage battery 20 performs charging and discharging such that the first storage battery 10 can be sufficiently charged and discharged. That is, the output of the entire storage battery system 1 is maintained by changing the distribution factor of the total current command value in accordance with the stopped state of the first storage battery 10.

Furthermore, as shown in Fig. 3, when the first storage battery 10 functions normally and detection the second storage battery 20 is detected as being abnormal (step S20), the number of second storage batteries 20 is subtracted from the initial total number "n" of storage batteries. The number after the subtraction of the second storage batteries 20 is updated as the quantity of storage batteries used for the distribution of the total current command value (step S21). That is, the set quantity value is updated.

The updated set quantity value "n" thus becomes "1." Thus, the distributor 2 supplies the total current command value provided from the controller 3 to the comparator 15 of the first storage battery 20. Therefore, even if an abnormality occurs in the second storage battery 20, the first storage battery 10 performs charging and discharging such that the second storage battery 20 can be sufficiently charged and discharged. That is, the output of the entire storage battery system 1 can be maintained by changing the distribution factor of the total current command value in accordance with the abnormal state of the second storage battery 20.

The present example has the following advantages.

(1) The total current command value is equally distributed in accordance with the quantity of storage batteries 10, 20. Thus, an equal input current command value is provided to the comparator 15, 25 of each of the storage batteries 10, 20. The input current of each of the storage batteries 10, 20 is thus equally maintained. The two storage batteries 10, 20 are thereby equally consumed, thus limiting outstanding deterioration of only one of the storage batteries.

(2) When any of the two storage batteries 10, 20 is stopped, the total current command value is distributed excluding the quantity of storage batteries that is stopped. Thus, the output of the entire storage battery system 1 is maintained even if any of the two storage batteries 10, 20 is in the stopped state.

(3) When any of the two storage batteries 10, 20 is in the abnormal state, the total current command value is distributed excluding the quantity of storage batteries in the abnormal state. Thus, the output of the entire storage battery system 1 is maintained even if any of the two storage batteries 10, 20 is in the abnormal state.

Second example

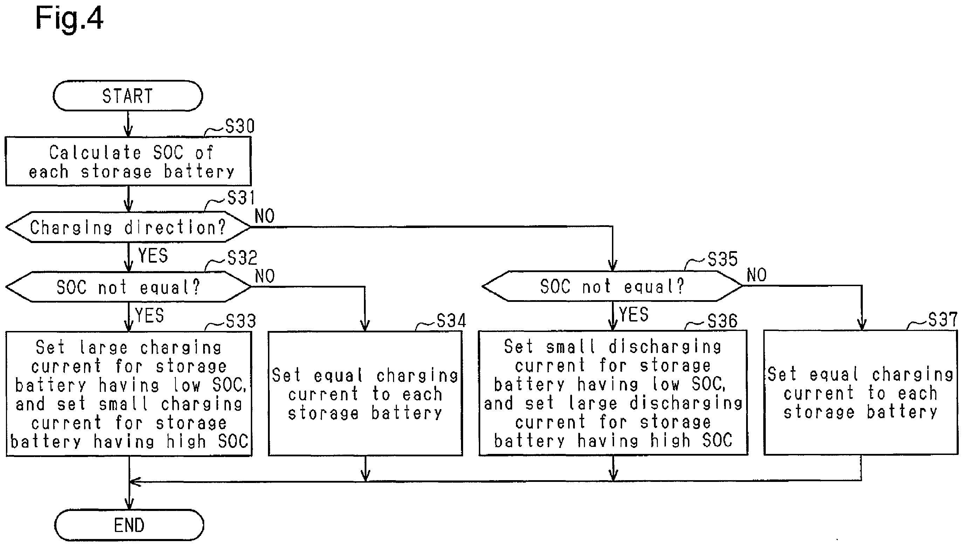

A second example, which is an application example of the first embodiment, will now be described with reference to Figs. 4 to 7.

In the second example, a rule in which the total current command value is distributed in accordance with the SOC (State of Charge) of the two storage batteries 10, 20 is set as the charging and discharging rule. The SOC is, for example, calculated based on an integral value of the discharging current and the charging current detected by the corresponding current sensor 14, 24. The SOC is calculated, for example, when the distributor 2 acquires the detection result of the corresponding current sensor 14, 24.

As shown in Fig. 4, after the SOC of each of the storage batteries 10, 20 is calculated, it is determined whether the direction of the current detected by the corresponding current sensor 14, 24 is the charging direction or the discharging direction (steps S30, 31).

If it is determined that the direction of the current is the charging direction (step S31: YES), it is determined whether or not the SOC is not equal in the two storage batteries 10, 20 (step S32).

If it is determined that the SOC is not equal in the two storage batteries 10, 20 (step S32: YES), the total current command value is distributed proportionally so that the charging current of the storage battery having a low SOC is relatively large and the charging current of the storage battery having a high SOC is relatively small (step S33). Thus, when the SOC of the first storage battery 10 is lower than the SOC of the second storage battery 20, the total current command value is distributed proportionally so that the input current command value for to the first storage battery 10 is higher than the input current command value for the second storage battery 20.

If it is determined that the SOC is equal in the two storage batteries in step S32 (step S32: NO), the charging currents of the two storage batteries are set to equal values (step S34). Thus, the input current command value is equally divided into two in the distributor 2.

If it is determined that the direction of the current is the discharging direction in step S31 (step S31: NO), it is determined whether or not the SOC is not equal in the two storage batteries 10, 20 (step S35).

If it is determined that the SOCs of the two storage batteries 10, 20 are not equal (step S35: YES), the total current command value is distributed proportionally such that the discharging current of the storage battery having a low SOC is relatively small and the discharging current of the storage battery having a high SOC is relatively large (step S36). Thus, for example, if the SOC of the first storage battery 10 is lower than the SOC of the second storage battery 20, the total current command value is distributed proportionally so that the input current command value for the first storage battery 10 becomes lower than the input current command value for the second storage battery 20.

If it is determined that the SOC is equal in the two storage batteries 10, 20 in step S35 (step S35: NO), the charging currents of the two storage batteries 10, 20 are set to equal values (step S37). Thus, the total current command value is divided into two equal input current command values in the distributor 2.

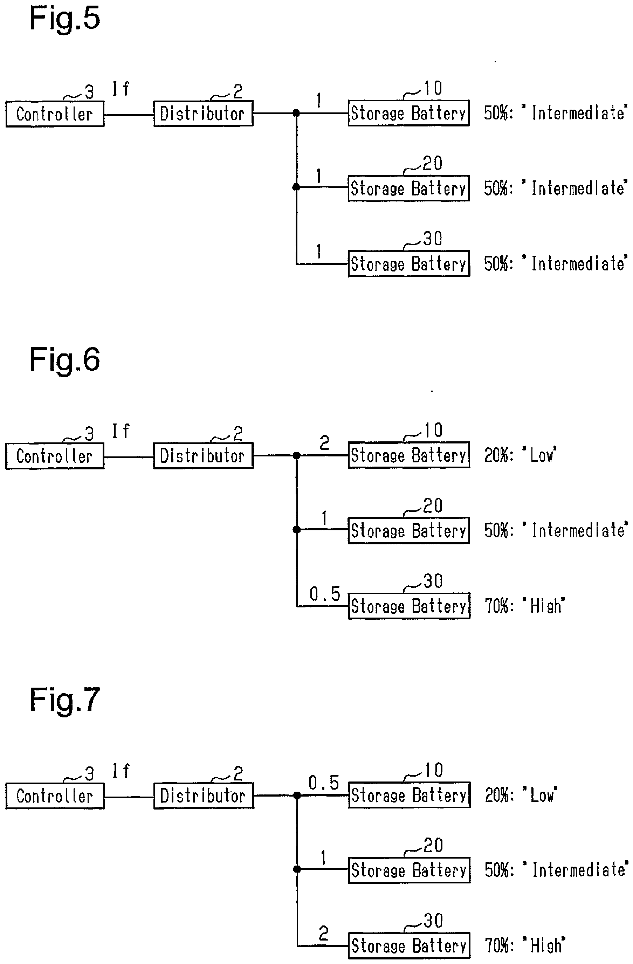

The operation of the second example will now be described with reference to Figs. 5 to 7. In this example, the storage battery system 1 is configured to include, for example, three storage batteries 10, 20, 30.

Fig. 5 shows a case in which the SOC is balanced in the three storage batteries 10, 20, 30 at approximately 50%. The distributor 2 generates an input current command value obtained by equally dividing the total current command value provided from the controller 3 into three. The distributor 2 provides the three equal input current command values to the storage batteries 10, 20, 30. Thus, the input currents of the three storage batteries 10, 20, 30 are adjusted to be equal.

Fig. 6 shows a case in which the three storage batteries 10, 20, 30 respectively have an SOC of 20%, 50%, and 70% during charging. The distributor 2 divides the total current command value provided from the controller 3 into three at a reciprocal ratio of the SOCs, for example, to generate three input current command values. The distributor 2 provides the three divided input current command values to the three storage batteries 10, 20, 30.

Thus, the highest charging current is set to the first storage battery 10 having the lowest SOC, and the lowest charging current is set to the first storage battery 10 having the highest SOC. As a result, the charging speed of the first storage battery 10 having the lowest SOC is increased. In contrast, the charging speed of the third storage battery 30 having the highest SOC is decreased. Thus, the charging current is controlled to resolve the SOC imbalance of the three storage batteries 10, 20, 30.

As shown in Fig. 7, during discharging of the storage batteries 10, 20, 30, the distributor 2 divides the total current command value provided from the controller 3 into three in accordance with the SOC ratio, for example, to generate three input current command values. The distributor 2 provides the three input current command values to the three storage batteries 10, 20, 30.

Thus, the lowest discharging current is set to the first storage battery 10 having the lowest SOC, and the highest discharging current is set to the first storage battery 10 having the highest SOC. As a result, the discharging of the first storage battery 10 having the highest SOC is decreased. Furthermore, the discharging speed of the third storage battery 30 having the highest SOC is increased. Thus, the discharging current is controlled to resolve the SOC imbalance of the three storage batteries 10, 20, 30.

The second example has the following advantages.

(1) The total current command value is distributed in accordance with the SOC of the two storage batteries 10, 20. The charging and discharging corresponding to the SOC of the two storage batteries 10, 20 is performed.

(2) When charging the two storage batteries 10, 20, the total current command value is distributed in accordance with the reciprocal ratio of the SOCs. Thus, the charging of the storage batteries 10, 20 having a low SOC is increased, and the charging of the storage batteries 10, 20 having a high SOC is decreased. Therefore, when the SOC is not equal in the two storage batteries 10, 20, the charging current is controlled so that the two SOC conform to each other.

(3) When discharging the two storage batteries 10, 20, the total current command value is distributed in accordance with the ratio of the SOCs. Thus, the discharging of the storage batteries 10, 20 having a low SOC is decreased, and the discharging of the storage batteries 10, 20 having a high SOC is increased. Therefore, when the SOC is not equal in the two storage batteries 10, 20, the discharging current is controlled so that the SOC is equal in the two storage batteries 10, 20.

Third Example

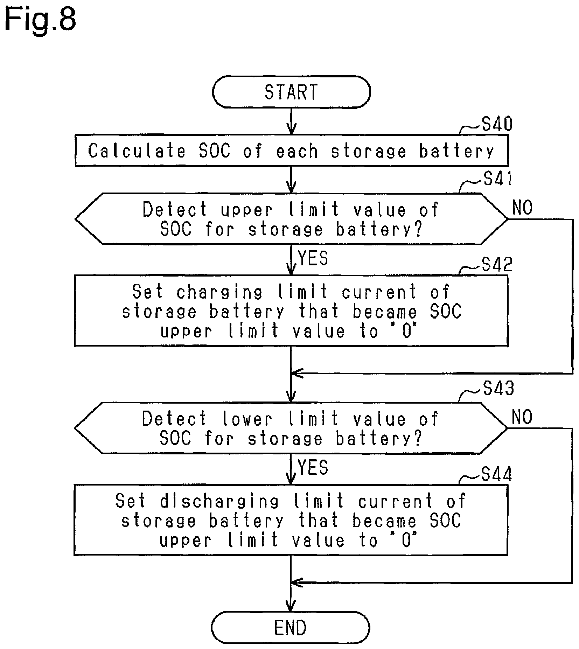

A third example, which is an application example of the first embodiment, will now be described with reference to Fig. 8.

In the third example, a rule in which the total current command value is distributed in accordance with whether or not the SOC of the two storage batteries 10, 20 has become the upper limit value or the lower limit value is set as the charging and discharging rule. The determination of whether or not the SOC of the storage batteries 10, 20 has become the upper limit value or the lower limit value is, for example, determined based on the specification of the storage batteries 10, 20 and the integral value of the current detected by the corresponding current sensor 14, 24.

As shown in Fig. 8, after the SOC of each of the storage batteries 10, 20 is calculated in step S40, it is determined whether or not each calculated SOC has become the upper limit value of the predetermined SOC for the storage batteries 10, 20 (step S41).

For example, when the SOC of the first storage battery 10 has become the upper limit value (step S41: YES), a limit current, which is a limit value of the charging current of the first storage battery 10, is set to "0" (step S42). Thus, the distributor 2 sets the value of the input current command value to assign "0" to the first storage battery 10 during charging. As a result, the charging current of the first storage battery 10 becomes "0," and the overcharging of the first storage battery 10, of which the SOC has become the upper limit value, is restricted. When the SOC does not become the upper limit value in both of the storage batteries 10, 20 (step S41: NO), step S42 is omitted.

Next, it is determined whether or not the calculated SOC of the storage battery 10, 20 has become the predetermined SOC lower limit value of each of the storage batteries 10, 20 (step S43).

For example, when the SOC of the second storage battery 10 has become the lower limit value (step S43: YES), the limit current, which is the limit value of the discharging current, of the second storage battery 10 is set to "0" (step S44). Thus, the distributor 2 sets the input current command value to assign "0" to the second storage battery 20 during discharging. As a result, the discharging current of "0" is supplied to the second storage battery 10, and over-discharging of the second storage battery 20, of which the SOC has become the lower limit value, is restricted. When the SOC does not become the lower limit value in the two storage batteries 10, 20 (step S43: NO), step S44 is omitted.

After the limit values of the charging current and the discharging current are set, the present process is terminated.

The present example has the following advantages.

(1) When the SOC of each of the storage batteries 10, 20 becomes the upper limit value, the limit of the charging current for each of the storage batteries 10, 20 is set to "0." Thus, when the SOC of each of the storage batteries 10, 20 becomes the upper limit value, further charging is restricted in the storage batteries 10, 20. Therefore, overcharging is restricted in the storage batteries 10, 20.

(2) When the SOC of the storage battery 10, 20 becomes the lower limit value, the limit of the discharging current for each of the storage batteries 10, 20 is set to "0." Thus, when the SOC of each of the storage batteries 10, 20 becomes the lower limit value, further discharging is restricted in the storage batteries 10, 20. Therefore, over-discharging is restricted in the storage batteries 10, 20.

Fourth Example

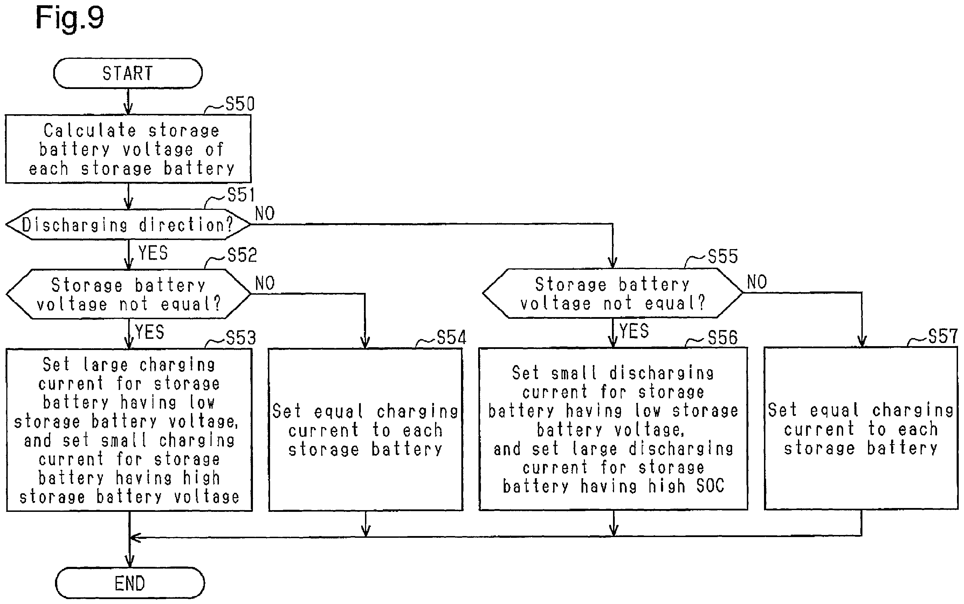

A fourth example, which is an application example of the first embodiment, will now be described with reference to Fig. 9.

In the fourth example, a rule in which the total current command value is distributed in accordance with the storage battery voltage, which is the output voltage of the two storage batteries 10, 20, is set as the charging and discharging rule. The storage battery voltage of each of the storage batteries 10, 20 is, for example, detected by a voltage sensor for detecting the voltage of the storage battery 10, 20.

As shown in Fig. 9, after the storage battery voltage of each of the storage batteries 10, 20 is detected, it is determined whether the direction of the current detected by the corresponding current sensor 14, 24 is the charging direction or the discharging direction (steps S50, 51).

If it is determined that the direction of the current is the charging direction (step S51: YES), it is determined whether or not the storage battery voltages of the two storage batteries 10, 20 are not equal (step S52).

If it is determined that the storage battery voltages of the two storage batteries 10, 20 are not equal (step S52: YES), the total current command value is distributed proportionally so that the a relatively large charging current is supplied to the storage battery having a low storage battery voltage and a relatively small charging current is supplied to the storage battery having a high storage battery voltage (step S53). Thus, when the storage battery voltage of the first storage battery 10 is lower than the storage battery voltage of the second storage battery 20, the total current command value is distributed proportionally so that the input current command value for the first storage battery 10 is higher than the input current command value for the second storage battery 20. The total current command value is thereby divided by a reciprocal ratio of the storage battery voltages.

If it is determined that the storage battery voltages of the two storage batteries are equal in step S52 (step S52: NO), the charging currents of the two storage batteries 10, 20 are set to equal values (step S54). Thus, the input current command value is equally divided into two in the distributor 2.

If it is determined that the direction of the current is the discharging direction in step S51 (step S51: NO), it is determined whether or not the storage battery voltages of the two storage batteries 10, 20 are not equal (step S55).

If it is determined that the storage battery voltages of the two storage batteries 10, 20 are not equal (step S55: YES), the total current command value is distributed proportionally such that a relatively low discharging current is supplied to the storage battery having a low storage battery voltage and a relatively high discharging current is supplied to the storage battery having a high storage battery voltage (step S56). Thus, for example, when the storage battery voltage of the first storage battery 10 is lower than the storage battery voltage of the second storage battery 20, the total current command value is distributed proportionally so that the input current command value for the first storage battery 10 is lower than the input current command value for the second storage battery 20. The total current command value is divided at the ratio of the storage battery voltages.

If it is determined that the storage battery voltages of the two storage batteries 10, 20 are equal in step S55 (step S55: NO), the charging currents of the two storage batteries 10, 20 are respectively set to an equal value (step S57). Thus, the input current command value is equally divided into two in the distributor 2.

The fourth example has the following advantages.

(1) The total current command value is distributed in accordance with the storage battery voltages of the two storage batteries 10, 20. The charging and discharging is performed in correspondence with the storage battery voltages of the two storage batteries 10, 20.

(2) During charging of the two storage batteries 10, 20, the total current command value is distributed in accordance with the reciprocal ratio of the storage battery voltages. Thus, the charging of the storage batteries 10, 20 having a low storage battery voltage is increased, and the charging with respect to the storage battery 10, 20 having a high storage battery voltage is decreased. Therefore, when the storage battery voltages are not equal in the two storage batteries 10, 20, the charging current is controlled so that the two storage battery voltages conform to each other.

(3) In the discharging of the two storage batteries 10, 20, the total current command value is distributed in accordance with the ratio of the storage battery voltages. Thus, the discharging of the storage batteries 10, 20 having a low storage battery voltage is decreased, and the discharging of the storage batteries 10, 20 having a high storage battery voltage is increased. Therefore, when the storage battery voltages are not equal in the two storage batteries 10, 20, the discharging current is controlled so that the imbalance of the two storage battery voltages is resolved.

Fifth Example

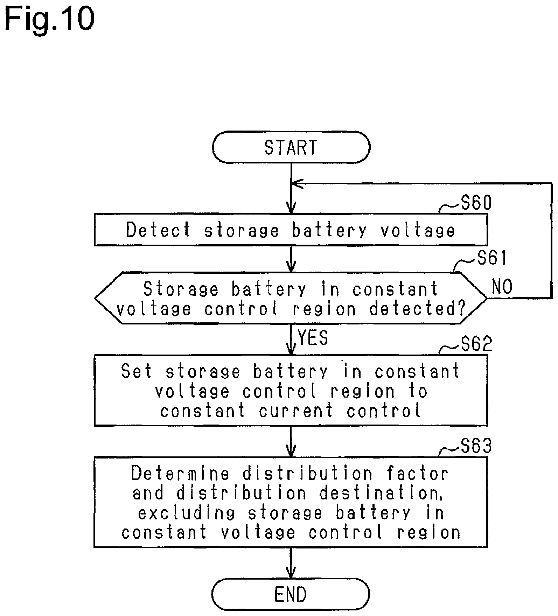

A fifth example, which is an application example of the first embodiment, will now be described with reference to Fig. 10.

In the fifth example, a rule in which the total current command value is set based on whether or not the voltages of the two storage batteries 10, 20 has become a level enabling constant voltage control is set as the charging and discharging rule. The constant voltage control in the fifth example is executed at the final period of charging and is a process for performing charging at a constant voltage when the voltages of the two storage batteries 10, 20 are higher than or equal to a constant voltage. It is determined whether or not to perform constant voltage charging on each of the storage batteries 10, 20 based on whether or not the voltage of the storage battery 10, 20 has become a voltage specified in advance. Furthermore, the constant current control in the fifth example performs charging at a constant current and is executed at the initial period of charging.

As shown in Fig. 10, for example, when the voltages of the storage batteries 10, 20, in which charging is performed under the constant current control, are detected, it is determined whether or not the detected voltage has become the specified voltage value set for constant voltage charging determination (steps S60, S61).

For example, if it is determined that the voltage of the first storage battery 10 has become a level enabling constant voltage control, a constant voltage control value is set as the input current command value for the first storage battery 10 (step S62). In other words, the charging method of the first storage battery 10 is changed from constant current control to constant voltage control due to the increase in the voltage of the first storage battery 10 to the specified voltage value.

Next, the total current command value is distributed to the quantity (n=2-1) of the entire storage battery system 1 excluding the quantity of first storage batteries 10 (step S63). In other words, the total current command value distributed to the two storage batteries 10, 20 is assigned only to the second storage battery 20. The total current command value is the same value before and after the charging method of the first storage battery 10 is changed.

The present process is repeatedly executed until the second storage battery 20 reaches the level enabling constant voltage control.

The fifth example has the following advantage.

(1) The input current command value is assigned so that the total current command value is constant before and after switching between the constant voltage control and the constant current control. Thus, even if the charging method of one of the two storage batteries 10, 20 is switched, the total current command value for the entire storage battery system 1 is kept constant.

(Sixth Example)

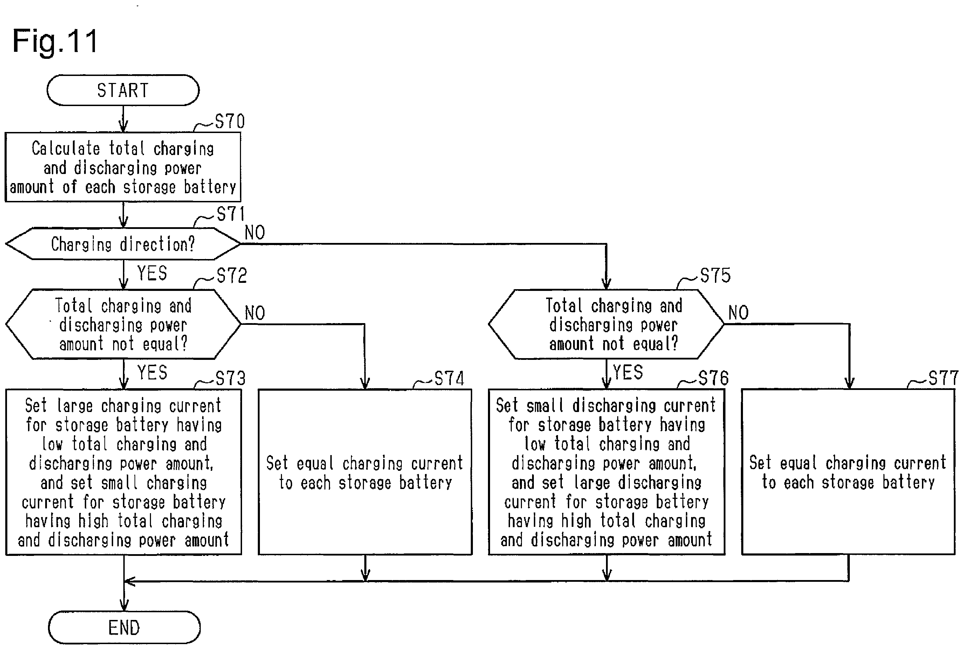

A sixth example, which is an application example of the first embodiment, will now be described with reference to Fig. 11.

In the sixth example, a rule in which the total current command value is distributed in accordance with the total charging and discharging power amounts of the two storage batteries 10, 20 is set as the charging and discharging rule. The total charging and discharging power amount of the two storage batteries 10, 20 is a total value of the charging and discharging power amount from when the first charging and discharging of the storage batteries 10, 20 started. The total charging and discharging power amount is calculated, for example, based on the integral value of the discharging current and the charging current detected by each current sensor 14, 24. The calculation of the total charging and discharging power amount is performed, for example, when the distributor 2 acquires the detection result of each current sensor 14, 24.

As shown in Fig. 11, after the total charging and discharging power amount of the two storage batteries 10, 20 is calculated, it is determined whether the direction of current detected by each current sensor 14, 24 is the charging direction or the discharging direction (steps S70, 71).

If it is determined that the direction of the current is the charging direction (step S71: YES), it is determined whether or not the total charging and discharging power amount is not equal between the two storage batteries 10, 20 (step S72).

If it is determined that the total charging and discharging power amount is not equal between the two storage batteries 10, 20 (step S72: YES), the total current command value is distributed proportionally so that a relatively large charging current is supplied to the storage battery having a small total charging and discharging power amount and a relatively small charging current is supplied to the storage battery having a large total charging and discharging power amount (step S73). Thus, when the total charging and discharging power amount of the first storage battery 10 is smaller than the total charging and discharging power amount of the second storage battery 20, the total current command value is distributed proportionally so that the input current command value for the first storage battery 10 is higher than the input current command value for the second storage battery 20. The total current command value is divided into two by the reciprocal ratio of the total charging and discharging power amount.

If it is determined that the total charging and discharging power amount is equal in the two storage batteries in step S72 (step S72: NO), the charging currents of the two storage batteries 10, 20 are set to equal values (step S74). Thus, the input current command value is equally divided into two in the distributor 2.

If it is determined that the direction of the current is the discharging direction in step S71 (step S71: NO), it is determined whether or not the total charging and discharging power amount is not equal between the two storage batteries 10, 20 (step S75).

If it is determined that the total charging and discharging power amount is not equal in the two storage batteries 10, 20 (step S75: YES), the total current command value is distributed proportionally such that a relatively small discharging current is supplied to the storage battery having a small total charging and discharging power amount and a relatively large discharging current is supplied to the storage battery having a large total charging and discharging power amount (step S76). Thus, for example, when the total charging and discharging power amount of the first storage battery 10 is smaller than the total charging and discharging power amount of the second storage battery 20, the total current command value is distributed proportionally so that the input current command value for the first storage battery 10 is lower than the input current command value for the second storage battery 20. The total current command value is thus divided into two in accordance with the ratio of the total charging and discharging power amount.

If it is determined that the total charging and discharging power amount is equal in the two storage batteries 10, 20 in step S75 (step S75: NO), the charging currents of the two storage batteries 10, 20 are set to equal values (step S77). Thus, the input current command value is equally divided into two in the distributor 2.

The fifth example has the following advantages.

(1) The total current command value is distributed in accordance with the total charging and discharging power amount of the two storage batteries 10, 20. Thus, charging and discharging are performed in correspondence with the total charging and discharging power amount of the two storage batteries 10, 20.

(2) When charging the two storage batteries 10, 20, the total current command value is distributed in accordance with the reciprocal ratio of the total charging and discharging power amounts. Thus, the charging of the storage batteries 10, 20 having a small charging and discharging power amount is increased, and the charging of the storage batteries 10, 20 having a large charging and discharging power amount is decreased. Therefore, when the charging and discharging power amount is not equal between the two storage batteries 10, 20, the charging current is controlled so that the two charging and discharging power amounts conform to each other.

(3) In the discharging of the two storage batteries 10, 20, the total current command value is distributed in accordance with the ratio of the charging and discharging power amounts. Thus, the discharging of the storage batteries 10, 20 having a small charging and discharging power amount is decreased, and the discharging of the storage batteries 10, 20 having a large charging and discharging power amount is increased. Therefore, when the charging and discharging power amount is not equal in the two storage batteries 10, 20, the discharging current is controlled so that the two charging and discharging power amounts conform to each other.

Seventh Example

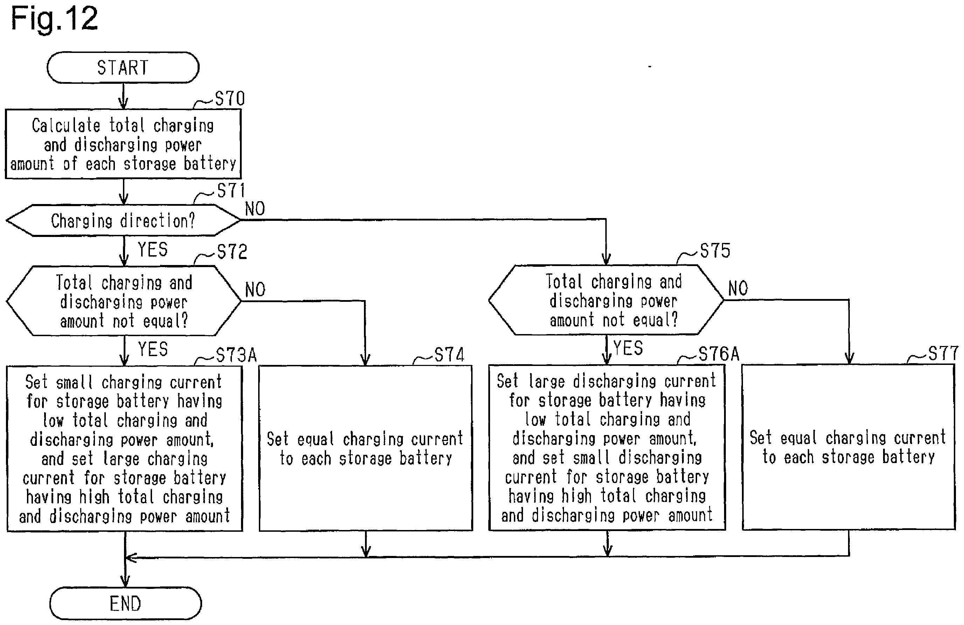

A seventh example, which is an application example of the first embodiment, will now be described with reference to Fig. 12. The flowchart shown in Fig. 12 corresponds to the flowchart of Fig. 11. In Fig. 12, same step numbers are given to those steps that are the same as the corresponding steps of Fig. 11.

In the seventh example, a rule in which the total current command value is distributed in accordance with the total charging and discharging power amount of the two storage batteries 10, 20 is set as the charging and discharging rule.

As shown in step S72 of Fig. 12, a case in which the two total charging and discharging power amounts are determined to be not equal at the time of charging will be described. In the seventh example, the total current command value is distributed proportionally so that a relatively small charging current is supplied to the storage battery having a small total charging and discharging power amount, and a relatively large charging current is supplied to the storage battery having a large total charging and discharging power amount (step S73A).

As shown in step S75, a case in which the two total charging and discharging power amounts are determined as not equal at the time of discharging will be described. In the seventh example, the total current command value is distributed proportionally so that a relatively large discharging current is supplied to the storage battery having a small total charging and discharging power amount, and a relatively small discharging current is supplied to the storage battery having a large total charging and discharging power amount (step S76A).

The seventh example has the following advantages.

(1) The total current command value is distributed in accordance with the total charging and discharging power amounts of the two storage batteries 10, 20. Thus, the charging and discharging are performed in correspondence with the total charging and discharging power amounts of the two storage batteries 10, 20.

(2) In the charging of the two storage batteries 10, 20, the total current command value is distributed in accordance with the ratio of the total charging and discharging power amounts. Thus, charging is decreased when each of the storage batteries 10, 20 has a small charging and discharging power amount, and charging is increased when each of the storage batteries 10, 20 has a large charging and discharging power amount. Therefore, charging of each of the storage batteries 10, 20 used over a relatively large number of times is further increased and charging of each of the storage batteries 10, 20 used over a relatively small number of times is further decreased. This extends the lifespan of one of the two storage batteries 10, 20 in the storage battery system 1 through the charging control.

(3) In the discharging of the two storage batteries 10, 20, the total current command value is distributed in accordance with the reciprocal ratio of the charging and discharging power amounts. Thus, discharging of the storage batteries 10, 20 having a small charging and discharging power amount is decreased, and discharging of the storage batteries 10, 20 having a large charging and discharging power amount is increased. Therefore, discharging of the storage batteries 10, 20 used over a relatively large number of times is further increased and discharging of the storage batteries 10, 20 used over a relatively small number of times is further decreased. This extends the lifespan of one of the two storage batteries 10, 20 in the storage battery system 1 through the discharging control.

Eighth example

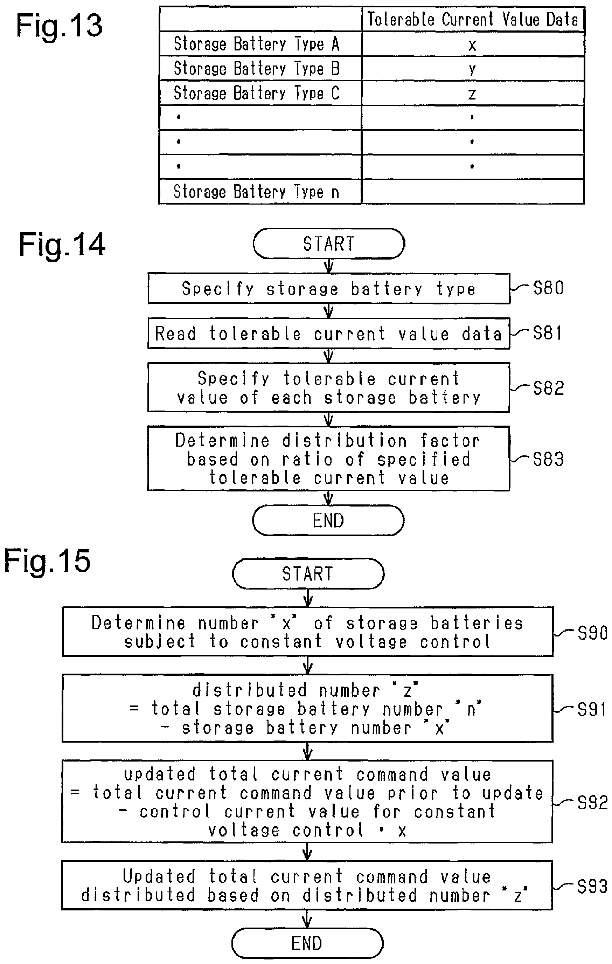

An eighth example, which is an application example of the first embodiment, will now be described with reference to Fig. 13.

In the eighth example, a rule in which the total current command value is distributed in accordance with the type of two storage batteries 10, 20 is set as the charging and discharging rule.

As shown in Fig. 13, the distributor 2 of the eighth example holds information related to the tolerable current value data specified for the type of each of the two storage batteries 10, 20. The tolerable current value data is, for example, data indicating the current value determined based on the specification of the storage batteries 10, 20. The tolerable current value data indicates, for example, the current value at which the storage batteries 10, 20 can be maintained within a specified temperature range when charging and discharging the storage batteries 10, 20.

As shown in Fig. 14, in the eighth example, the type of each of the storage batteries 10, 20 is first specified (step S80). The specification of the type is, for example, performed based on information input in advance to the distributor 2.

Then, the tolerable current value data is read, and the tolerable current value data of each of the storage batteries 10, 20 is specified based on the tolerable current value data and the specified type (steps S81, S82).

After the tolerable current value data of each of the storage batteries 10, 20 is specified, for example, the distribution factor of the total current command value is determined in accordance with the ratio of the two current values respectively indicated by the two tolerable current value data (step S83). Then, the input current command value of each of the storage batteries 10, 20 is generated by distributing the total current command value in accordance with the determined distribution factor.

The eighth example has the following advantages.

(1) The total current command value is distributed in accordance with the tolerable current value data. Thus, in terms of specification, the charging current and the discharging current are controlled within a specified range that allows for a flow to each of the storage batteries 10, 20.

(2) The total current command value is distributed in accordance with the ratio of the two tolerable current value data. Thus, the input current is set to be relatively large higher as the tolerable current value increases. The input current is set to be relatively smaller as the lower the tolerable current value decreases. Thus, the input current is controlled within the range of the tolerable current value, and charging and discharging are efficiently performed within the range of the tolerable current value of each of the storage batteries 10, 20.

Ninth example

A ninth example, which is an application example of the first embodiment, will now be described with reference to Fig. 15.

In the ninth example, a rule in which the total current command value is distributed in accordance with the storage batteries 10, 20 that undergoes constant voltage control is set as the charging and discharging rule.

As shown in Fig. 15, when distributing the total current command value, the number "x" of storage batteries 10, 20 subject to constant voltage control is determined (step S90). The subject of constant voltage control is, for example, selected based on whether or not the storage battery voltage exceeds a specified value or whether or not the SOC exceeds a specified value. If the subject of constant voltage control does not exist, the subject number "x" of the constant voltage control is set to "0."

After the subject number "x" of the constant voltage control is determined, the subject number "x" is subtracted from the total number "n" of storage batteries of the storage battery system 1 (step S91). The number of non-subjects "z of the constant voltage control, that is, the number of subjects of the constant current control is thereby calculated.

Then, the control current value for the constant voltage control is subtracted from the total current command value (step S92). The difference of the total current command value and the control current value for the constant voltage control is calculated in this manner. The calculated difference is then updated as the total current command value that is distributed.

After the total current command value is updated, the total current command value is distributed based on the subject number "z" of the constant current control (step S93). The input current command value assigned to the storage batteries 10, 20 from the total current command value is provided to the storage batteries 10, 20 subject to constant current control. The control current value for the constant voltage control is supplied to the storage batteries 10, 20 subject to constant voltage control.

The ninth example has the following advantage.

(1) The distribution of the total current command value is based on the difference of the control current value for the constant voltage control and the total current command value. Thus, the control current value for the constant voltage control is added to the input current of the storage batteries 10, 20 of the entire storage battery system 1. This balances the total current command value and the input current of the storage batteries 10, 20 subject to constant voltage control and constant current control. The output of the storage battery system 1 is increased and becomes equal to the output value indicated by the total current command value.

Tenth example

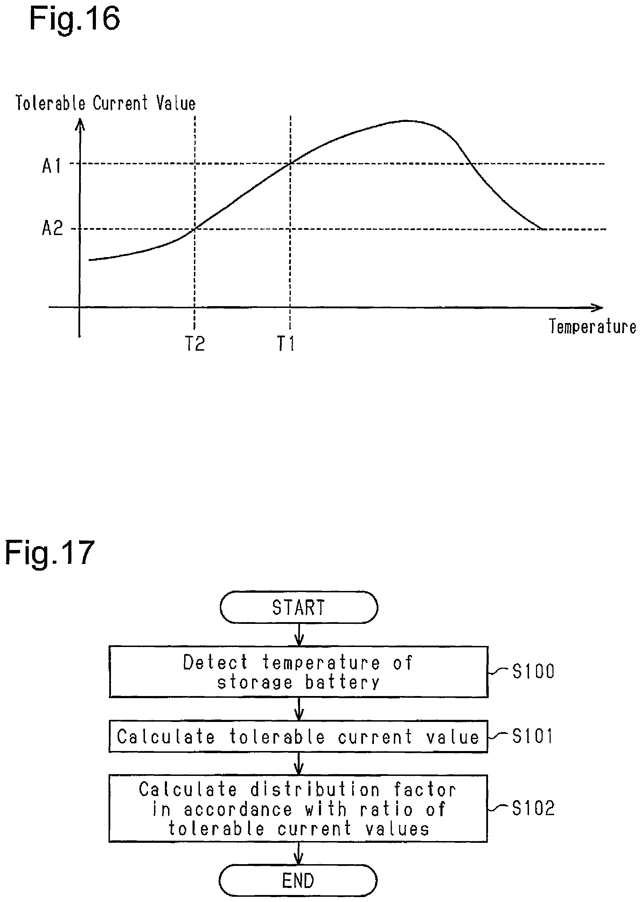

A tenth example, which is an application example of the first embodiment, will now be described with reference to Figs. 16 and 17.

In the tenth example, a rule in which the total current command value is distributed in accordance with the temperature characteristics of each of the storage batteries 10, 20 is set as the charging and discharging rule.

Fig. 16 shows the temperature characteristics of the storage batteries 10, 20. As shown in Fig. 16, the tolerable current value at which the charging and discharging by the storage batteries 10, 20 is allowed is correlated with the temperature of the storage batteries 10, 20. In the tenth example, the tolerable current value has a characteristic in which it increases in proportion to the temperature until becoming equal to a predetermined temperature and decreases in proportion to the temperature after exceeding the predetermined temperature. The temperature of the storage batteries 10, 20 is detected, for example, by a temperature sensor attached to the storage batteries 10, 20. The distributor 2 of the tenth example holds a table indicating the relationship of the temperature such as the temperature characteristics and the tolerable current table.

As shown in Fig. 16, for example, when the temperature of the first storage battery 10 is temperature T1, the tolerable current value at temperature T1 is value A1. Furthermore, for example, when the temperature of the second storage battery 20 is temperature T2, the tolerable current value at temperature T2 is a value A2 (A1 >A2). In the tenth example, the distribution factor of the total current command value is calculated in accordance with the reciprocal ratio of the values A1, A2 of the tolerable current value.

As shown in Fig. 17, when distributing the total current command value, the temperature of each of the storage batteries 10, 20 is detected (step S100). After the temperature of each of the storage batteries 10, 20 is detected, the tolerable current value is specified based on the temperature and the above-described temperature characteristics (step S101).

When the tolerable current value of each of the storage batteries 10, 20 is specified, for example, the total current command value is divided into a plurality of input current command values according to the ratio of each of the specified tolerable current values (step S102). Each input current command value is provided to a comparator 15, 25 of the corresponding storage battery 10, 20. Thus, a relatively high input current command value is provided to the comparator 15, 25 of the storage battery 10, 20 having a high tolerable current value. A relatively low input current command value is provided to the comparator 15, 25 of the storage battery 10, 20 having a low tolerable current value.

The tenth example has the following advantages.

(1) The total current command value is distributed in accordance with the tolerable current value obtained from the temperature characteristics of each of the storage batteries 10, 20. Thus, the total current command value is distributed in accordance with the temperature characteristics.

(2) The total current command value is distributed in accordance with the ratio of the tolerable current values of each of the storage batteries 10, 20. Thus, a relatively high input current command value is provided to the storage battery 10, 20 having a high tolerable current value. A relatively low input current command value is provided to the storage battery 10, 20 having a low tolerable current value. Thus, an input current command value of which the tolerable current value is the upper limit value and is comparable with the range of the upper limit value is set for each of the storage batteries 10, 20. Thus, the storage batteries 10, 20 may be effectively used within the range of the tolerable current value.

Second Embodiment

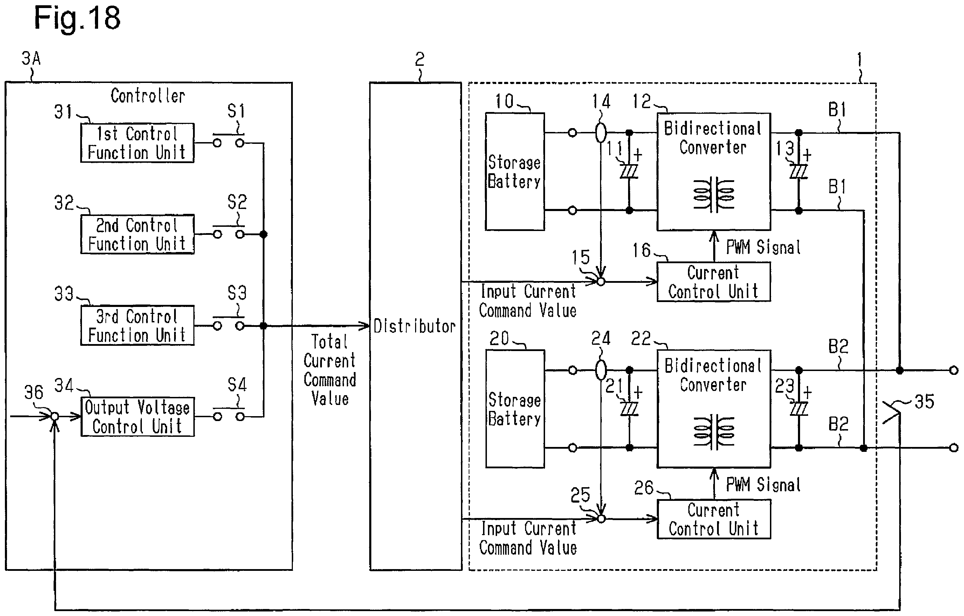

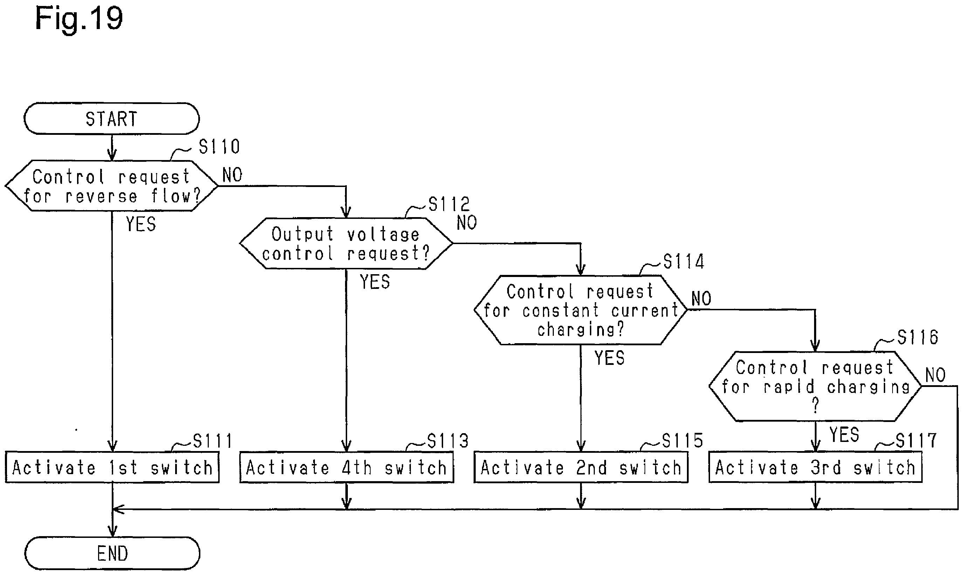

A storage battery management system and a storage battery management method of a second embodiment will now be described with reference to Figs. 18 and 19 focusing on the differences from the first embodiment. The storage battery management system and the storage battery management method of the second embodiment are basically the same as the first embodiment. Thus, in Figs. 18 and 19, same reference numerals are given to those components that are the same as the corresponding components of the first embodiment. Such components will not be described.

As shown in Fig. 18, a controller 3A of the second embodiment includes a first control function unit 31, a second control function unit 32, and a third control function unit 33 having different control functions. The controller 3A includes an output voltage control unit 34 that functions as a fourth control function unit. Furthermore, the controller 3A includes first to third switches S1 to S3 that switch the outputs of the first to third control function units 31 to 33. The controller 3A includes a fourth switch S4 that switches the output of the output voltage control unit 34.

The first control function unit 31 is activated, for example, when the storage battery system 1 is operated in coordination with a system power supply. The first control function unit 31 executes a control for restricting a reverse flow of power output from the storage battery system 1 to the system power supply. After generating a total current command value for restricting a reverse flow, the first control function unit 31 supplies the generated total current command value to the distributor 2 via the first switch S1.

The second control function unit 32 executes, for example, a control for constant-current charging each of the storage batteries 10, 20. The second control function unit 32 generates a total current command value for constant current charging. The second control function unit 32 provides the generated total current command value for the constant current charging to the distributor 2 via the second switch S2.

The third control function unit 33 executes, for example, a control for rapid charging each of the storage batteries 10, 20. The third control function unit 33 generates a total current command value specified for the rapid charging. The third control function unit 33 provides the generated total current command value for the rapid charging to the distributor 2 via the third switch S3.

The output voltage control unit 34 has, for example, a function for controlling the output voltage of the entire storage battery system 1. For example, the output voltage control unit 34 detects the output voltage of the storage battery system 1 with a voltage sensor 35 arranged on the bus B2, from which the output of the storage battery system 1 is retrieved. The output voltage control unit 34 compares the detected output voltage and the externally supplied command voltage value with a comparator 36. If the detected output voltage and the externally supplied command voltage value are different, the output voltage control unit 34 generates a total current command value that resolves the difference. The output voltage control unit 34 supplies the generated total current command value to the distributor 2 via the fourth switch S4.

The first switch S1 switches the output state of the first control function unit 31. When a request for reverse flow restriction control is received from the controller 3A, the first switch S1 provides the reverse flow restriction total current command value generated by the first control function unit 31 to the distributor 2. The first switch S1 does not output the total current command value for restricting the reverse flow from the first control function unit 31 until requested by the controller 3A.

The second switch S2 switches the output state of the second control function unit 32. In response to a control request for constant current charging from the controller 3A, the second switch S2 provides the total current command value for the constant current charging generated by the second control function unit 32 to the distributor 2. The second switch S2 does not output the constant current charging total current command value, which is provided from the second control function unit 32, until requested by the controller 3A.

The third switch S3 switches the output state of the third control function unit 33. When a start request for rapid charging is received from the controller 3A, the third switch S3 provides a rapid charging total current command value generated by the third control function unit 33 to the distributor 2. The third switch S3 does not output the rapid charging total current command value from the third control function unit 33 until requested by the controller 3A.

The fourth switch S4 switches the output state of the output voltage control function unit 34. When requested to control the output voltage by the controller 3A, the fourth switch S4 provides an output power adjustment total current command value generated by the output voltage control unit 34 to the distributor 2. The fourth switch S4 does not output the total current command value from the output voltage control unit 34 until requested by the controller 3A.

The operations of the storage battery management system and the storage battery management method of the second embodiment will now be described.

As shown in Fig. 19, for example, the storage battery system 1 and the system power supply cooperate to determine whether or not the controller 3A is requesting for reverse flow control (step S110).

If there is a request for reverse flow control (step S110: YES), the first switch S1 is activated (step S111). This provides distributor 2 with the reverse flow restriction total current command value generated by the first control function unit 31.

If there is no request for reverse flow made (step S110: NO), it is determined whether or not the controller 3A is requesting for control of the output voltage of the storage battery system 1 (step S112). For example, when the fluctuation of the output voltage exceeds a specified value and control of the output voltage is requested (step S112: YES), the fourth switch S4 is activated (step S113). This provides the distributor 2 with the output voltage adjustment total current command value generated by the output voltage control unit 34.

If there is no request for control of the output voltage (step S112: NO), it is determined whether or not the controller 3A requesting for constant current charging control (step S114). For example, when the SOC of the storage batteries 10, 20 is lower than the specified value and the constant current charging control is requested (step S114: YES), the second switch S2 is activated (step S115). This provides the distributor 2 with a constant current charging total current command value generated by the second control function unit 32.

If there is no request for constant current charging control (step S114: NO), it is determined whether or not the controller 3A is requesting for rapid charging (step S116). For example, when the SOC of the storage batteries 10, 20 is lower than the specified value and the rapid charging control is requested (step S116: YES), the third switch S3 is activated (step S117). This provides the distributor 2 with a rapid charging control total current command value generated by the third control function unit 33.

As described above, the following advantages are further obtained by the storage battery management system and the storage battery management method of the second embodiment.

(1) The controller 3A includes the first control function unit 31, the second control function unit 32, the second control function unit 32, and the output voltage control unit 34 having different control functions. The output of each function is switched by the first switch S1 to the fourth switch S4. Thus, a different total current command value is generated in accordance with the function requested to the storage battery system 1. Thus, each of the storage batteries 10, 20 may be used in various manners.

(2) The controller 3A includes the first control function unit 31 that generates the reverse flow restriction total current command value. Thus, during cooperative operation of the storage battery system 1, the reverse flow restriction total current command value is generated. Thus, the function of restricting reverse flow is actuated in accordance with the switching of the cooperative operation and the independent operation of the storage battery system 1.

(3) The controller 3A includes the second control function unit 32 that generates the constant current charging control total current command value. The controller 3A also includes the second switch S2 that switches the output state of the second control function unit 32. Thus, the controller 3A, for example, switches between constant current charging and constant voltage charging with the second switch S2.

(4) The controller 3A includes the third control function unit 33 that generates the rapid charging total current command value. Thus, when rapid charging of the storage batteries 10, 20 is requested, rapid charging of the storage batteries 10, 20 is performed in accordance with the total current command value generated by the third control function unit 33. This allows for switching of the rapid charging of the storage batteries 10, 20 and other modes of charging.

(5) The controller 3A includes the output voltage control unit 34 that generates the output voltage adjustment total current command value for the storage battery system 1. The output of the output voltage control unit 34 is switched by the fourth switch S4. The switching of the fourth switch S4 allows for output voltage adjustment of the entire storage battery system 1.

Third embodiment

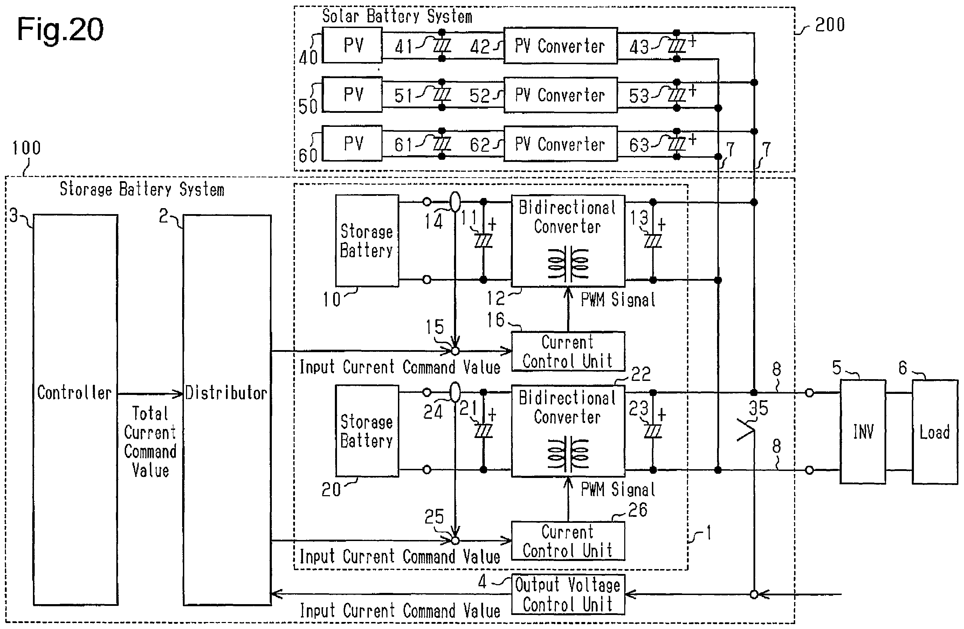

A storage battery management system and a storage battery management method of a third embodiment will now be described with reference to Fig. 20 centering on the difference with the first embodiment. The storage battery management system and the storage battery management method of the third embodiment are basically the same as the first embodiment.

Thus, in Fig. 20, same reference numerals are given to those components that are the same as the corresponding components of the first embodiment. Such components will not be described.

As shown in Fig. 20, the storage battery management system and the storage battery management method of the third embodiment include a storage battery system 100 including the storage battery system 1 and the like and a solar battery system 200.

The storage battery system 100 includes the storage battery system 1, the distributor 2, and the controller 3. The storage battery system 100 includes an output voltage adjustment unit 4 that adjusts the output voltage of the storage battery system 1.

The output voltage adjustment unit 4 detects the output voltage of the storage battery system 1 with the voltage sensor 35. The output voltage adjustment unit 4 compares the value of the detected voltage with a voltage command value provided from an external device. The output voltage adjustment unit 4 generates an input current command value as a control value that conforms the value of the detected voltage to the voltage command value provided from the external device. The output voltage adjustment unit 4 provides the generated input current command value to the distributor 2. For example, when the power generation amount of the solar batteries 40, 50, 60 decreases due to bad weather, the voltage command value increases so as to compensate for the decreased power generation amount. In contrast, for example, when the power generation amount of the solar batteries 40, 50, 60 increases, the voltage command value decreases accordingly.

When the input current command value is provided to the distributor 2, the distributor 2 distributes and provides the total current command value to the storage battery system 1. Thus, the storage battery system 1 generates the DC output power corresponding to the voltage command value. The output power of the storage battery system 1 is supplied to the inverter (INV) 5 that converts DC power to AC power.

The inverter 5 is configured by a plurality of switching elements. When DC power is supplied to the inverter 5, the inverter 5 converts the DC power to AC power. The inverter 5 supplies the converted AC power to the load 6. Furthermore, when DC power is supplied from the solar battery system 200 to the inverter 5, the inverter 5 converts the DC power to AC power. The inverter 5 supplies the converted AC power to the load 6.

The solar battery system 200 includes three solar batteries 40, 50, 60, three capacitors 41, 51, 61, three PV (Photovoltaic) converters 42, 52, 62, and three capacitors 43, 53, 63. The PV converter 42 is connected to the solar battery 40 via the capacitor 41. Two buses 7, which transmit the output power of the converter 42, are connected to the output of the PV converter 42. The capacitor 43 is connected between the two buses 7. The distal ends of the two buses 7 are respectively connected to intermediate portions of two buses 8 through which the output of the storage battery system 1 is transmitted. In such a configuration, when the DC power generated by the solar battery 40 is supplied to the PV converter 42, the PV converter 42 transforms the supplied DC power, and supplies the transformed DC voltage to the inverter 5 and the load 6 via the buses 7 and the buses 8. The solar battery 50, the capacitor 51, the PV converter 52, and the capacitor 53, as well as the solar battery 60, the capacitor 61, the PV converter 62, and the capacitor 63 are configured in the same manner as the solar battery 40, the capacitor 41, the PV converter 42, and the capacitor 43.

In the third embodiment, for example, if the load 6 is stopped or the power generation power amount of the solar batteries 40, 50, 60 is greater than the consumption power amount of the load 6, the DC power generated by the solar batteries 40, 50, 60 is accumulated in the storage batteries 10, 20. In other words, the surplus power of the three solar batteries 40, 50, 60 is accumulated in the two storage batteries 10, 20.

The controller 3 of the storage battery 100 monitors, for example, the power amount generated by each solar battery 40, 50, 60. When detected that the monitored power amount is greater than the consumption power amount of the load 6, the controller 3 generates the total current command value for accumulating the surplus power of each solar battery 40, 50, 60 in the storage batteries 10, 20. In the same manner, if detecting that the monitored power amount has exceeded "0" when the consumption power amount of the load 6 is "0," the controller 3 generates a total current command value for accumulating the surplus power of the three solar batteries 40, 50, 60 in the two storage batteries 10, 20. This accumulates the surplus power of the three solar batteries 40, 50, 60 supplied via the buses 7 in the two storage batteries 10, 20.

The operations of the storage battery management system and the storage battery management method of the present embodiment will now be described.

In the solar battery system 200 shown in Fig. 20, when the solar battery 40 generates power, the PV converter 42 transforms the voltage of the generated DC power to a specified voltage and supplies the transformed output power of the solar battery 40 to the inverter 5 via the bus 7 and the bus 8. When the solar battery 50 generates power, the PV converter 52 transforms the voltage of the generated DC power to a specified voltage and supplies the transformed output power of the solar battery 50 to the inverter 5 via the bus 7 and the bus 8. Furthermore, when the solar battery 60 generates power, the PV converter 62 transforms the voltage of the generated DC power to a specified voltage, and supplies the transformed output power of the solar battery 60 to the inverter 5 via the bus 7 and the bus 8.

In the storage battery system 100, a total current command value is generated in accordance with the voltage command value during discharging. Based on the generated total current command value, the distributor 2 assigns two input current command values to the two storage batteries 10, 20, respectively. The distributor 2 supplies the assigned input current command value to the storage battery system 1. The storage battery system 1 controls the charging or the discharging of each of the storage batteries 10, 20 in accordance with the input current command value. For example, the discharging is controlled in the two storage batteries 10, 20 to retrieve output power corresponding to the voltage command value of the output voltage adjustment unit 4 from the storage battery system 1. The retrieved output voltage is supplied to the inverter 5 and the load 6 via the bus 8.

When the storage battery system 100 is charged, the surplus power generated in the three solar batteries 40, 50, 60 is accumulated in the two storage batteries 10, 20 in accordance with the input current command values assigned by the distributor 2. Thus, the surplus power of the three solar batteries 40, 50, 60 is accumulated in the two storage batteries 10, 20 in accordance with the specified distribution factor of the distributor 2.

As described above, the storage battery management system and the storage battery management method according to the third embodiment have the following advantages.

    (1) The storage battery system 100 and the solar battery system 200 cooperate to supply power to the load 6. Thus, for example, when the output of the solar battery system 200 decreases due to bad weather, the storage battery system 100 outputs the power that compensates for the decreased output to the load 6. The storage battery system 100 compensates for fluctuations in the power of the solar battery system 200.

    (2) The surplus power of the solar battery system 200 is accumulated in the storage batteries 10, 20 in accordance with the specified distribution factor of the distributor 2. Thus, surplus power of the solar battery system 200 is effectively used.

Fourth Embodiment

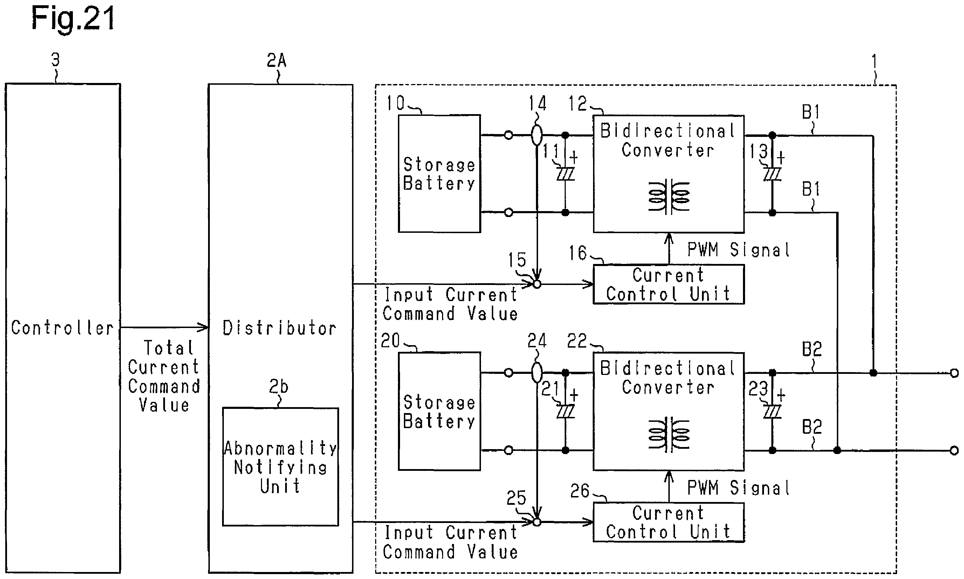

A storage battery management system and a storage battery management method of a fourth embodiment will now be described with reference to Fig. 21 focusing on differences from the first embodiment. The storage battery management system and the storage battery management method of the fourth embodiment are basically the same as the first embodiment. Thus, in Fig. 21, same reference numerals are given to those components that are the same as the corresponding components of the first embodiment. Such components will not be described.

As shown in Fig. 21, a distributor 2A of the fourth embodiment further includes an abnormality notifying unit 2b that notifies abnormality of the storage battery system 1.

The abnormality notifying unit 2b monitors, for example, whether or not an abnormality has occurred based on the tolerable charging and discharging current value, which is specified in accordance with the specification of the storage batteries 10, 20, and a total current command value. The tolerable charging and discharging current value is, for example, a value indicating the maximum value of the charging current and the maximum value of the discharging current specified in the standard for the storage batteries 10, 20.

When the total current command value from the controller 3 is provided to the abnormality notifying unit 2b, the abnormality notifying unit 2b compares the total current command value and the tolerable charging and discharging current value. When the compared total current command value is greater than or equal to the tolerable charging and discharging current value, the abnormality notifying unit 2b performs a process for notifying the abnormality. The abnormality notifying unit 2b, for example, issues a warning noise, and transmits an email indicating the occurrence of an abnormality to a management center or the like of the storage battery system 1 as the process for notifying the abnormality.

As described above, the storage battery management system and the storage battery management method according to the fourth embodiment further have the following advantage.

(1) The distributor 2A includes the abnormality notifying unit 2b that performs abnormality notification. The abnormality notifying unit 2b notifies the abnormality when the total current command value is greater than or equal to the charging and discharging current value. Thus, when the total current command value is greater than or equal to the charging and discharging current value, a notification is issued to indicate the occurrence of an abnormality in the storage battery system 1. This prompts the setting of the total current command value within the range of the charging and discharging current value.

Other Embodiments

The first to fourth embodiments may be implemented as described below.

As shown in Fig. 19, in the second embodiment, the request of each control function is determined in the order of the control request for reverse flow, the control request for output voltage, the control request for constant current charging, and the control request for rapid charging. However, the requests of a plurality of control functions may be determined in any order. For example, the determination order of the requests of the plurality of control functions may be specified based on priority that is in accordance with the usage status of the storage battery system 1.

In the second embodiment, the controller 3A is configured by four control function units, the first control function unit 31, the second control function unit 32, the third control function unit 33, and the output voltage control unit 34. Instead, the controller 3A may be configured by only at least two of the first control function unit 31, the second control function unit 32, the third control function unit 33, and the output voltage control unit 34. This also generates multiple types of total current command values when at least two functions are switched. In addition, for example, the control function of the controller 3A may be a function for generating the total current command value that keeps the SOC and the voltage of the storage batteries 10, 20 constant and that may be varied.

In the third embodiment, the inverter 5 is arranged at the output side of the storage battery system 100 and the solar battery system 200. Instead, the inverter 5 may be omitted if the load 6 can directly use the DC power. Accordingly, DC power, which is the output of the storage battery 100 and the solar battery system 200, is supplied to the load 6.

In the fourth embodiment, the abnormality notifying unit 2b is applied to the storage battery management system and the storage battery management method of the first embodiment. However, the abnormality notifying unit 2b may also be applied to the storage battery management system and the storage battery management method of the second and third embodiments. The abnormality notifying function added by the abnormality notifying unit 2b further increases the reliability of the storage battery management system and the storage battery management method.

The storage battery management system and the storage battery management method of the first embodiment are used as the subject to which the first to tenth examples are applied. Instead, the storage battery management system and the storage battery management method of the second to fourth embodiments may be used as the subject to which the first to tenth examples are applied.

In the tenth example, the total current command value is distributed in accordance with the ratio of the tolerable current values of the storage batteries 10, 20. Instead, the total current command value may be distributed in accordance with the reciprocal ratio of the tolerable current values of the storage batteries 10, 20.

In the tenth example, the tolerable current value for each temperature is used as the temperature characteristics of the storage batteries 10, 20. In addition, the charging efficiency for each temperature of the storage batteries 10, 20 may be used as the temperature characteristics. The charging efficiency may be calculated from the detected temperature of the storage batteries 10, 20. Accordingly, for example, the total current command value is distributed at the ratio of the calculated charging efficiency. Thus, the storage battery having a relatively high charging efficiency is further charged or discharged. Charging and discharging are performed in correspondence with the charging efficiency. This further increases the usage efficiency of the storage batteries 10, 20.

In the ninth example, the difference of the constant voltage control current value and the total current command value is the subject of distribution. Instead, for example, a total value of the control current value for the constant voltage control and the total current command value may be used as the subject of distribution.

In the eighth example, the total current command value is distributed in accordance with the ratio of the tolerable current value data. This is not the sole case, and the total current command value may be distributed in accordance with the reciprocal ratio of the tolerable current value data.

In the eighth example, the total current command value is distributed in accordance with the tolerable current value data. Instead, for example, the total value of the tolerable current value of the storage batteries 10, 20 may be set as the total current command value. The total current command value may be distributed using the tolerable current value of the storage batteries 10, 20 as the upper limit value. Accordingly, the charging current or the discharging current is set to the tolerable current value in the storage batteries 10, 20. This sets the maximum charging current of the discharging current in the range of the tolerable current value and maximizes the charging power amount and the discharging power amount.

In the fifth example, the total current command value is distributed by the quantity of storage batteries, excluding the quantity of storage batteries changed to the constant voltage control. Instead, the value obtained by subtracting the input current command value assigned to the storage battery changed to the constant voltage control from the total current command value may be the subject of assignment. Thus, the input current command value having the same level before and after the switching of the constant voltage control is input to all storage batteries, excluding storage batteries changed to the constant voltage control. This reduces fluctuation of the input current command value resulting from the switching of the constant voltage control.

In the fourth example, the total current command value is distributed in accordance with the reciprocal ratio of the storage battery voltage when the storage batteries 10, 20 are charged. In contrast, during charging of the storage batteries 10, 20, the total current command value may be distributed in accordance with the ratio of the storage battery voltages. Accordingly, the charging of the storage batteries 10, 20 having a low storage battery voltage is decreased, and the charging of the storage batteries 10, 20 having a high storage battery voltage is increased. Thus, when the storage battery voltage is not equal in the two storage batteries 10, 20, the charging of the storage battery having a relatively high voltage is further increased. This completes the charging of one of the two storage batteries 10, 20 earlier.

In the fourth example, the total current command value is distributed in accordance with the ratio of the storage battery voltages when the storage batteries 10, 20 are discharged. Instead, the total current command value may be distributed in accordance with the reciprocal ratio of the storage battery voltages when the storage batteries 10, 20 are discharged. Accordingly, the discharging of the storage batteries 10, 20 having a low storage battery voltage is increased, and the discharging of the storage batteries 10, 20 having a high storage battery voltage is decreased. Thus, when the storage battery voltage is not equal in the two storage batteries 10, 20, priority is given to the use of the power of the storage battery 10, 20 having a low storage battery voltage. Furthermore, the power of the storage battery 10, 20 having a high storage battery voltage is maintained.

In the third example, when the SOC becomes the upper limit value, the limit of the charging current of the storage battery 10, 20 having the SOC that has become the upper limit is set to "0." Instead, the control may be executed such that the limit of the charging current gradually decreases as the SOC becomes closer to the upper limit value. The upper limit value of the SOC does not have to be, for example, a specified SOC such as 100% or the like and may be a value having a predetermined width such as, for example, a value set in a range of 70% to 95%.

In the third example, when the SOC reaches the lower limit value, the limit of the discharging current of the storage battery 10, 20 having the SOC that has become the lower limit is set to "0." Instead, the control may be executed such that the limit of the discharging current gradually decreases as the SOC becomes closer to the lower limit value. The lower limit value of the SOC does not have to be, for example, a specified SOC such as 0% or the like and may be a value having a predetermined width such as, for example, a value set in a range of 5% to 20%.

In the second example, during charging of the storage batteries 10, 20, the total current command value is distributed in accordance with the reciprocal ratio of the SOCs. In contrast, during charging of the storage batteries 10, 20, the total current command value may be distributed in accordance with the ratio of the SOCs. Accordingly, the charging of the storage batteries 10, 20 having a low SOC is decreased, and the charging of the storage batteries 10, 20 having a high SOC is increased. Thus, the charging of the storage batteries 10, 20 having a high SOC is controlled to be completed earlier.

In the second example, during discharging of the storage batteries 10, 20, the total current command value is distributed in accordance with the ratio of the SOC. In contrast, during discharging of the storage batteries 10, 20, the total current command value may be distributed in accordance with the reciprocal ratio of the SOC. Accordingly, the discharging of the storage batteries 10, 20 having a low SOC is increased, and the discharging of the storage batteries 10, 20 having a high SOC is increased. The power of the storage battery 10, 20 having a high SOC is thus maintained.

In the first example, when any of the storage battery 10, 20 is in the stopped state, the total current command value of the same value, excluding the quantity of storage batteries in the stopped state, is distributed. Instead, when any of the storage battery 10, 20 is in the stopped state, the input current command value distributed to the storage battery in the stopped state may be subtracted from the total current command value. This reduces fluctuation of the input current command value for the continuously operated one of the storage batteries 10, 20.

In the first example, when any of the storage battery 10, 20 is in the abnormal state, the total current command value of the same value, excluding the quantity of storage batteries in the stopped state, is distributed. Instead, when any of the storage battery 10, 20 is in the abnormal state, the input current command value distributed to the storage battery in the abnormal state may be subtracted from the total current command value. The subtracted total current command value may be distributed. This reduces fluctuation of the input current command value for the continuously operated one of the storage batteries 10, 20.

In the first example, the total current command value is equally distributed in accordance with the quantity of storage batteries 10, 20. Instead, for example, the total current command value may be distributed in accordance with the quantity of storage batteries 10, 20 and the capacity of each of the storage batteries 10, 20. For example, the total current command value may be alternately provided at a predetermined interval to the first storage battery 10 and the second storage battery 20.

In the first to fourth embodiments, the charging current and the discharging current of the storage batteries 10, 20 are controlled as the input current of the storage batteries 10, 20. Instead, the current in one direction of the charging current or the discharging current of the storage batteries 10, 20 may be controlled as the input current of the storage batteries 10, 20. If only the current in one direction is the subject of control, the one-way converter may be used instead of the bidirectional converters 12, 22. Furthermore, a converter that can convert between DC and AC may be used in place of the bidirectional converters 12, 22.

In the first to fourth embodiments, the storage battery system 1 includes two storage batteries 10, 20. Instead, the storage battery system 1 may include three or more storage batteries. In the same manner, the storage battery system 1 may include one storage battery.

**Claims**

1. A storage battery management system including a plurality of storage batteries (10, 20) and a plurality of converters (12, 22) respectively being configured to control input currents of the storage batteries, wherein the input currents are at least either one of charging currents and discharging currents, the storage battery management system comprising:

    a controller (3) that is configured to calculate a total current command value, which is the total command value of a plurality of input current command values, for controlling the input currents of the storage batteries (10, 20); and
    a distributor (2) that is configured to generate the plurality of input current command values from the total current command value calculated by the controller (3), wherein the distributor (2) is configured to assign the input current command values to the converters (12, 22) in accordance with a preset rule and provide the input current command values to the converters (12, 22),
    wherein the total current command value is one of different types of total current command values;
    the controller (3) includes:

        a plurality of control functions that is configured to respectively generate the different types of total current command values, and
        a switch that is configured to switch the control functions,
        the switch is configured to switch the control functions in accordance with a control function requested for the storage batteries (10, 20); and
        the distributor (2) is configured to receive the total current command value generated by one of the control functions, and generate the plurality of input current command values assigned to the converters (12, 22) from the received total current command value, wherein
        the control functions include at least two of an output voltage control function that is configured to control an output voltage of the storage batteries (10, 20) to be constant, a reverse flow restriction function that is configured to restrict reverse flow when the storage batteries (10, 20) operate in coordination with a system power supply, a constant current charging control function that is configured to charge the storage battery (10, 20) with a constant current, and a rapid charging function that is configured to control rapid charging of the storage battery.

2. The storage battery management system according to claim 1, wherein
each of the converters includes a bidirectional converter (12, 22) having a bidirectional voltage converting function;
the converters are respectively connected to the storage batteries; and
sets of the storage battery and the converter, which are connected to each other, are connected in parallel.

3. The storage battery management system according to any one of claims 1 to 2, wherein the preset rule includes a rule based on a quantity of storage batteries; and
the distributor (2) is configured to divide the total current command value by a set quantity value, which is the quantity of storage batteries, to determine the input current command values that are assigned.

4. The storage battery management system according to claim 3, wherein the distributor (2) is configured to set the set quantity value to an initial quantity of the storage batteries, and
the distributor (2) is configured to update the set quantity value by excluding the quantity of storage batteries that are in a stopped state from the initial quantity of storage batteries when determining that there is a storage battery in the stopped state, and/or
wherein the distributor (2) is configured to set the set quantity value to an initial quantity of the storage batteries, and
the distributor (2) is configured to update the set quantity value by excluding the quantity of storage batteries that are in an abnormal state from the initial quantity of storage batteries when determined that there is a storage battery in the abnormal state.

5. The storage battery management system according to any one of claims 1 to 2, wherein the preset rule includes a rule based on charge rates of the storage batteries; and
the distributor (2) is configured to determine a distribution factor of the total current command value in accordance with the charge rates of the storage batteries.

6. The storage battery management system according to claim 5 that cites claim 2, wherein:

   when input currents of the storage batteries are charging currents flowing to the storage batteries (10, 20), the distributor (2) is configured to assign, the input current command values respectively to the converters from the total current command value at a reciprocal ratio of the charge rates of the storage batteries (10, 20); and
   when input currents of the storage batteries (10, 20) are discharging currents flowing from the storage batteries, the distributor (2) is configured to assign the input current command values respectively to the converters (12, 22) from the total current command value at a ratio of the charge rates of the storage batteries (10, 20), and/or

wherein:

   the distributor (2) is configured to assign, to a converter corresponding to a storage battery having a charge rate that has become an upper limit value, an input current command value that sets a limit current for charging to zero; and
   the distributor (2) is configured to assign, to a converter corresponding to a storage battery having a charge rate that has become a lower limit value, an input current command value that sets a limit current for discharging to zero.

7. The storage battery management system according to any one of claims 1 to 2, wherein:

   the preset rule includes a rule based on voltages of the storage batteries (10, 20); and
   the distributor (2) is configured to generate, from the total current command value, a plurality of input current command values assigned to the converters in accordance with voltages of the storage batteries and provides the input current command values respectively to the converters.

8. The storage battery management system according to claim 7 that cites claim 2, wherein:

   when input currents of the storage batteries are charging currents flowing to the storage batteries (10, 20), the distributor (2) is configured to assign the input current command values, from the total current command value, respectively to the converters at a reciprocal ratio of the voltages of the storage batteries; and
   when input currents of the storage batteries are discharging currents flowing from the storage batteries, the distributor (2) is configured to assign the input current command values, from the total current command value, to the converters at a ratio of the voltages of the storage batteries, and/or
   wherein when voltage of at least one of the storage batteries becomes a predetermined voltage, the distributor (2) is configured to provide an input current command value for constant voltage charging to a converter corresponding to a storage battery having the predetermined voltage, and the distributor (2) is configured to distribute the total current command value to a converter corresponding to the storage batteries excluding the storage battery having the predetermined voltage.

**9.** The storage battery management system according to any one of claims 1 to 2, wherein:

> the preset rule includes a rule based on a total charging and discharging power amount, which is a total value of power amounts charged to the storage batteries (10, 20) or a total value of power amounts discharged from the storage batteries (10, 20); and
> the distributor (2) is configured to generate, from the total current command value, a plurality of input current command values assigned to the converters (12, 22) in accordance with the total charging and discharging power amount, and the distributor (2) is configured to supply the input current command values respectively to the converters.

**10.** The storage battery management system according to any one of claims 1 to 2, wherein the preset rule includes a rule based on tolerable current values of the storage batteries (10, 20).

**11.** The storage battery management system according to any one of claims 1 to 2, wherein when at least one of the storage batteries (10, 20) is charged at a constant voltage, the distributor (2) is configured to provide the converter corresponding to the storage battery charged at the constant voltage with an input current command value indicating a constant current value; and

> the distributor (2) is configured to assign a difference of the provided input current command value and the total current command value to the converters of the storage batteries, excluding the storage battery charged at the constant voltage.

**12.** The storage battery management system according to any one of claims 1 to 2, wherein the preset rule includes a rule based on temperature characteristics of the storage batteries (10, 20).

**13.** A storage battery management method for controlling input currents of a plurality of storage batteries (10, 20) respectively with a plurality of converters (12, 22), wherein the input currents are at least one of charging currents and discharging currents, the method comprising:

> calculating a total current command value, which is the total command value of a plurality of input current command values, for the plurality of storage batteries (10, 20) that are subject to management, wherein the total current command value is one of different types of total current command values, and the calculating includes switching the different types of total current command values in accordance with a control function requested for the storage batteries (10, 20);

assigning the plurality of current command values from the calculated total current command value to the converters (12, 22) in accordance with a preset rule; and

generating a plurality of input current command values respectively indicating the assigned current command values, and providing the input current command values to the converters (12, 22), wherein the control function is one of a plurality of control functions that include at least two of

an output voltage control function that is configured to control an output voltage of the storage batteries (10, 20) to be constant,

a reverse flow restriction function that is configured to restrict reverse flow when the storage batteries (10, 20) operate in coordination with a system power supply,

a constant current charging control function that is configured to charge the storage battery (10, 20) with a constant current, and

a rapid charging function that is configured to control rapid charging of the storage battery.

**Patentansprüche**

**1.** Speicherbatterieverwaltungssystem, das mehrere Speicherbatterien (10, 20) und mehrere Wandler (12, 22) aufweist, die jeweils dafür ausgelegt sind, Eingangsströme der Speicherbatterien zu steuern, wobei die Eingangsströme mindestens entweder Ladeströme oder Entladeströme sind, wobei das Speicherbatterieverwaltungssystem aufweist:

> eine Steuereinrichtung (3), die dazu eingerichtet ist, einen Gesamtstromsollwert zu berechnen, der der Gesamtsollwert mehrerer Eingangsstromsollwerte ist, um die Eingangsströme der Speicherbatterien (10, 20) zu steuern; und
> einen Verteiler (2), der dazu eingerichtet ist, die mehreren Eingangsstromsollwerte anhand des Gesamtstromsollwerts zu erzeugen, der durch die Steuereinrichtung (3) berechnet ist, wobei der Verteiler (2) dazu eingerichtet ist, die Eingangsstromsollwerte den Wandlern (12, 22) gemäß einer voreingestellten Regel zuzuweisen und die Eingangsstromsollwerte für die Wandler (12, 22) vorzusehen,
> wobei der Gesamtstromsollwert einer von unterschiedlichen Typen von Gesamtstromsollwerten ist;
> wobei die Steuereinrichtung (3) enthält:

>> mehrere Steuerungsfunktionen, die dazu eingerichtet sind, jeweils die unterschiedlichen Typen von Gesamtstromsollwerten zu erzeugen, und

einen Schalter, der dazu eingerichtet ist, die Steuerungsfunktionen umzuschalten,

der Schalter dazu eingerichtet ist, die Steuerungsfunktionen gemäß einer Steuerungsfunktion umzuschalten, die für die Speicherbatterien (10, 20) angefordert ist; und

der Verteiler (2) dazu eingerichtet ist, den Gesamtstromsollwert, der durch eine der Steuerungsfunktionen erzeugt ist, aufzunehmen und die mehreren Eingangsstromsollwerte zu erzeugen, die den Wandlern (12, 22) anhand des aufgenommenen Gesamtstromsollwerts zugewiesen sind, wobei

die Steuerungsfunktionen mindestens zwei von Folgendem enthalten:

eine Ausgangsspannungsteuerungsfunktion, die dazu eingerichtet ist, eine Ausgangsspannung der Speicherbatterien (10, 20) mit Blick auf Konstanz zu steuern,

eine Rückstromsperrfunktion, die dazu eingerichtet ist, einen Rückstrom zu sperren, wenn die Speicherbatterien (10, 20) mit einer Systemstromversorgung abgestimmt arbeiten,

eine konstante Stromladesteuerungsfunktion, die dazu eingerichtet ist, die Speicherbatterie (10, 20) mit einem konstanten Strom zu laden, und

eine Schnellladefunktion, die dazu eingerichtet ist, eine Schnellladung der Speicherbatterie zu steuern.

2. Speicherbatterieverwaltungssystem nach Anspruch 1, wobei
jede der Wandler einen bidirektionalen Wandler (12, 22) beinhaltet, der eine bidirektionale Spannungsumwandlungsfunktion aufweist;
die Wandler jeweils mit den Speicherbatterien verbunden sind; und
miteinander verbundene Sätze der Speicherbatterie und des Wandlers in Parallelschaltung verbunden sind.

3. Speicherbatterieverwaltungssystem nach einem beliebigen der Ansprüche 1 und 2, wobei die voreingestellte Regel eine Regel beinhaltet, die auf einer Anzahl von Speicherbatterien begründet ist; und der Verteiler (2) dazu eingerichtet ist, den Gesamtstromsollwert durch einen eingestellten Anzahlwert, der gleich der Anzahl von Speicherbatterien ist, zu dividieren, um die Eingangsstromsollwerte, die zugewiesen sind, zu ermitteln.

4. Speicherbatterieverwaltungssystem nach Anspruch 3, wobei der Verteiler (2) dazu eingerichtet ist, den eingestellten Anzahlwert auf eine anfängliche Anzahl der Speicherbatterien einzustellen, und
der Verteiler (2) dazu eingerichtet ist, den eingestellten Anzahlwert zu aktualisieren, indem die Anzahl von Speicherbatterien, die sich in einem angehaltenen Zustand befinden, von der anfängliche Anzahl von Speicherbatterien ausgeschlossen wird, wenn ermittelt ist, dass sich eine Speicherbatterie in dem angehaltenen Zustand befindet, und/oder
wobei der Verteiler (2) dazu eingerichtet ist, den eingestellten Anzahlwert auf eine anfängliche Anzahl der Speicherbatterien einzustellen, und
der Verteiler (2) dazu eingerichtet ist, den eingestellten Anzahlwert zu aktualisieren, indem die Anzahl von Speicherbatterien, die sich in einem anormalen Zustand befinden, von der anfänglichen Anzahl von Speicherbatterien ausgeschlossen wird, wenn ermittelt ist, dass sich eine Speicherbatterie in dem anormalen Zustand befindet.

5. Speicherbatterieverwaltungssystem nach einem beliebigen der Ansprüche 1 bis 2, wobei die voreingestellte Regel eine Regel beinhaltet, die auf Laderaten der Speicherbatterien begründet ist; und
der Verteiler (2) dazu eingerichtet ist, gemäß der Laderaten der Speicherbatterien einen Verteilungsfaktor des Gesamtstromsollwerts zu ermitteln.

6. Speicherbatterieverwaltungssystem nach Anspruch 5 mit Bezug auf Anspruch 2, wobei:

wenn Eingangsströme der Speicherbatterien Ladeströme sind, die zu den Speicherbatterien (10, 20) fließen, der Verteiler (2) dafür ausgelegt ist, den Wandlern die Eingangsstromsollwerte jeweils anhand des Gesamtstromsollwerts in einem reziproken Verhältnis der Laderaten der Speicherbatterien (10, 20) zuzuweisen; und
wenn Eingangsströme der Speicherbatterien (10, 20) Entadeströme sind, die aus den Speicherbatterien fließen, der Verteiler (2) dazu eingerichtet ist, den Wandlern (12, 22) die Eingangsstromsollwerte jeweils anhand des Gesamtstromsollwerts in einem Verhältnis der Laderaten der Speicherbatterien (10, 20) zuzuweisen, und/oder

wobei:

der Verteiler (2) dafür ausgelegt ist, einem Wandler, der einer Speicherbatterie entspricht, die eine Laderate aufweist, die einen oberen Grenzwert erreicht hat, einen Eingangsstromsollwert zuzuweisen, der einen Grenzstrom für Ladung auf Null einstellt; und
der Verteiler (2) dafür ausgelegt ist, einem Wandler, der einer Speicherbatterie entspricht, die eine Laderate aufweist, die einen unteren Grenzwert erreicht hat, einen Eingangsstromsollwert zuzuweisen, der einen Grenzstrom für Entladung auf Null einstellt.

7. Speicherbatterieverwaltungssystem nach einem beliebigen der Ansprüche 1 und 2, wobei:

die voreingestellte Regel eine Regel beinhaltet, die auf Spannungen der Speicherbatterien (10, 20) begründet ist; und der Verteiler (2) dazu eingerichtet ist, anhand des Gesamtstromsollwerts mehrere Eingangsstromsollwerte, die den Wandlern gemäß Spannungen der Speicherbatterien zugewiesen sind, zu erzeugen, und die Eingangsstromsollwerte jeweils für die Wandler vorsieht.

8. Speicherbatterieverwaltungssystem nach Anspruch 7 mit Bezug auf Anspruch 2, wobei:

wenn Eingangsströme der Speicherbatterien Ladeströme sind, die zu den Speicherbatterien (10, 20) fließen, der Verteiler (2) dazu eingerichtet ist, den Wandlern die Eingangsstromsollwerte jeweils anhand des Gesamtstromsollwerts in einem reziproken Verhältnis der Spannungen der Speicherbatterien zuzuweisen; und wenn Eingangsströme der Speicherbatterien Entadeströme sind, die aus den Speicherbatterien fließen, der Verteiler (2) dazu eingerichtet ist, den Wandlern die Eingangsstromsollwerte anhand des Gesamtstromsollwerts in einem Verhältnis der Spannungen der Speicherbatterien zuzuweisen, und/oder wobei, wenn eine Spannung wenigstens einer der Speicherbatterien eine vorbestimmte Spannung erreicht, der Verteiler (2) dazu eingerichtet ist, einen Eingangsstromsollwert für ein Laden mit konstanter Spannung für einen Wandler vorzusehen, der einer Speicherbatterie entspricht, die die vorbestimmte Spannung aufweist, und der Verteiler (2) dazu eingerichtet ist, den Gesamtstromsollwert zu einem Wandler zu verteilen, der den Speicherbatterien, mit Ausnahme der Speicherbatterie, die die vorbestimmte Spannung aufweist, entspricht.

9. Speicherbatterieverwaltungssystem nach einem beliebigen der Ansprüche 1 und 2, wobei:

die voreingestellte Regel eine Regel beinhaltet, die auf einer Gesamtlade- und Gesamtentladeleistungsmenge begründet ist, die ein Gesamtwert von Leistungsmengen, mit der die Speicherbatterien (10, 20) geladen sind, oder ein Gesamtwert von Leistungsmengen ist, die aus den Speicherbatterien (10, 20) entladen sind; und wobei der Verteiler (2) dazu eingerichtet ist, anhand des Gesamtstromsollwerts mehrere Eingangsstromsollwerte, die den Wandlern (12, 22) gemäß der Gesamtlade- und Gesamtentladeleistungsmenge zugewiesen sind, zu erzeugen, und der Verteiler (2) dazu eingerichtet ist, den Wandlern die Eingangsstromsollwerte jeweils zuzuführen.

10. Speicherbatterieverwaltungssystem nach einem beliebigen der Ansprüche 1 bis 2, wobei die voreingestellte Regel eine Regel beinhaltet, die auf verträglichen Stromstärkewerten der Speicherbatterien (10, 20) begründet ist.

11. Speicherbatterieverwaltungssystem nach einem beliebigen der Ansprüche 1 und 2, wobei, wenn mindestens eine der Speicherbatterien (10, 20) bei einer konstanten Spannung geladen wird, der Verteiler (2) dazu eingerichtet ist, für den Wandler, der der Speicherbatterie entspricht, die bei der konstanten Spannung geladen wird, einen Eingangsstromsollwert vorzusehen, der einen konstanten Stromstärkewert kennzeichnet; und der Verteiler (2) dafür ausgelegt ist, den Wandlern der Speicherbatterien, mit Ausnahme der Speicherbatterie, die bei der konstanten Spannung geladen wird, eine Differenz des vorgesehenen Eingangsstromsollwerts und des Gesamtstromsollwerts zuzuweisen.

12. Speicherbatterieverwaltungssystem nach einem beliebigen der Ansprüche 1 und 2, wobei die voreingestellte Regel eine Regel beinhaltet, die auf einer Temperaturcharakteristik der Speicherbatterien (10, 20) begründet ist.

13. Speicherbatterieverwaltungsverfahren zum jeweiligen Steuern von Eingangsströmen mehrerer Speicherbatterien (10, 20) mittels mehreren Wandlern (12, 22), wobei die Eingangsströme mindestens entweder Ladeströme oder Entladeströme sind, wobei das Verfahren Folgendes umfasst:

Berechnen eines Gesamtstromsollwerts, der der Gesamtsollwert mehrerer Eingangsstromsollwerte ist, für die mehreren zu verwaltenden Speicherbatterien (10, 20), wobei der Gesamtstromsollwert einer von unterschiedlichen Typen von Gesamtstromsollwerten ist, und das Berechnen ein Umschalten der unterschiedlichen Typen von Gesamtstromsollwerten gemäß einer Steuerungsfunktion umfasst, die für die Speicherbatterien (10, 20) angefordert ist; Zuweisen der mehreren Stromsollwerte anhand des berechneten Gesamtstromsollwerts den Wandlern (12, 22) gemäß einer voreingestellten Regel; und Erzeugen mehrerer Eingangsstromsollwerte, die jeweils die zugewiesenen Stromsollwerte kennzeichnen, und Vorsehen der Eingangsstromsollwerte für die Wandler (12, 22), wobei die Steuerungsfunktion eine von mehreren Steuerungsfunktionen ist, die mindestens zwei beinhalten von:

einer Ausgangsspannungsteuerungsfunktion, die dazu eingerichtet ist, eine Ausgangsspannung der Speicherbatterien (10, 20) mit Blick auf Konstanz zu steuern,

einer Rückstromsperrfunktion, die dazu eingerichtet ist, einen Rückstrom zu sperren, wenn die Speicherbatterien (10, 20) mit einer Systemstromversorgung koordiniert arbeiten,

einer konstanten Stromladesteuerungsfunktion, die dazu eingerichtet ist, die Speicherbatterie (10, 20) mit einem konstanten Strom zu laden, und

einer Schnellladefunktion, die dazu eingerichtet ist, eine Schnellladung der Speicherbatterie zu steuern.

## Revendications

1. Système de gestion d'accumulateurs électriques comprenant une pluralité d'accumulateurs électriques (10, 20) et une pluralité de convertisseurs (12, 22) lesquels sont configurés respectivement de manière à commander des courants d'entrée des accumulateurs électriques, dans lequel les courants d'entrée correspondent à au moins l'un ou l'autre parmi des courants de charge et des courants de décharge, dans lequel le système de gestion d'accumulateurs électriques comprend :

un contrôleur (3) qui est configuré de manière à calculer une valeur de commande de courant totale, laquelle correspond à la valeur de commande totale d'une pluralité de valeurs de commande de courant d'entrée, en vue de commander les courants d'entrée des accumulateurs électriques (10, 20) ; et
un distributeur (2) qui est configuré de manière à générer la pluralité de valeurs de commande de courant d'entrée à partir de la valeur de commande de courant totale qui est calculée par le contrôleur (3), dans lequel le distributeur (2) est configuré de manière à affecter les valeurs de commande de courant d'entrée aux convertisseurs (12, 22), selon une règle prédéfinie, et à fournir les valeurs de commande de courant d'entrée aux convertisseurs (12, 22) ;
dans lequel la valeur de commande de courant totale correspond à un type parmi différents types de valeurs de commande de courant totales ;
le contrôleur (3) inclut :

une pluralité de fonctions de commande configurée de manière à générer respectivement les différents types de valeurs de commande de courant totales ; et
un commutateur qui est configuré de manière à commuter les fonctions de commande ; dans lequel le commutateur est configuré de manière à commuter les fonctions de commande selon une fonction de commande demandée pour les accumulateurs électriques (10, 20) ; et

dans lequel le distributeur (2) est configuré de manière à recevoir la valeur de commande de courant totale générée par l'une des fonctions de commande, et à générer la pluralité de valeurs de commande de courant d'entrée affectée aux convertisseurs (12, 22), à partir de la valeur de commande de courant totale reçue, dans lequel :
les fonctions de commande incluent au moins deux fonctions parmi :

une fonction de commande de tension de sortie qui est configurée de manière à commander une tension de sortie des accumulateurs électriques (10, 20) afin qu'elle soit constante ;
une fonction de limitation de flux inverse qui est configurée de manière à limiter un flux inverse lorsque les accumulateurs électriques (10, 20) fonctionnent en coordination avec un bloc d'alimentation de système ;
une fonction de commande de charge à courant constant qui est configurée de manière à charger l'accumulateur électrique (10, 20) avec un courant constant ; et
une fonction de charge rapide qui est configurée de manière à commander une charge rapide de l'accumulateur électrique.

2. Système de gestion d'accumulateurs électriques selon la revendication 1, dans lequel :

chacun des convertisseurs inclut un convertisseur bidirectionnel (12, 22) présentant une fonction de conversion de tension bidirectionnelle ;
les convertisseurs sont respectivement connectés aux accumulateurs électriques ; et
des ensembles de l'accumulateur électrique et du convertisseur, qui sont mutuellement connectés, sont connectés en parallèle.

**3.** Système de gestion d'accumulateurs électriques selon l'une quelconque des revendications 1 à 2, dans lequel :

la règle prédéfinie inclut une règle basée sur une quantité d'accumulateurs électriques ; et le distributeur (2) est configuré de manière à diviser la valeur de commande de courant totale par une valeur de quantité définie, laquelle correspond à la quantité d'accumulateurs électriques, en vue de déterminer les valeurs de commande de courant d'entrée qui sont affectées.

**4.** Système de gestion d'accumulateurs électriques selon la revendication 3, dans lequel le distributeur (2) est configuré de manière à définir la valeur de quantité définie sur une quantité initiale des accumulateurs électriques ; et

dans lequel le distributeur (2) est configuré de manière à mettre à jour la valeur de quantité définie en excluant la quantité d'accumulateurs électriques qui sont dans un état d'arrêt de la quantité initiale d'accumulateurs électriques, lorsqu'il est déterminé qu'il existe un accumulateur électrique à l'état d'arrêt ; et/ou

dans lequel le distributeur (2) est configuré de manière à définir la valeur de quantité définie sur une quantité initiale des accumulateurs électriques ; et le distributeur (2) est configuré de manière à mettre à jour la valeur de quantité définie en excluant la quantité d'accumulateurs électriques qui sont dans un état anormal de la quantité initiale d'accumulateurs électriques, lorsqu'il est déterminé qu'il existe un accumulateur électrique à l'état anormal.

**5.** Système de gestion d'accumulateurs électriques selon l'une quelconque des revendications 1 à 2, dans lequel la règle prédéfinie inclut une règle basée sur les taux de charge des accumulateurs électriques ; et

dans lequel le distributeur (2) est configuré de manière à déterminer un facteur de distribution de la valeur de commande de courant totale selon les taux de charge des accumulateurs électriques.

**6.** Système de gestion d'accumulateurs électriques selon la revendication 5, lorsqu'elle dépend de la revendication 2, dans lequel :

lorsque des courants d'entrée des accumulateurs électriques correspondent à des courants de charge s'écoulant vers les accumulateurs électriques (10, 20), le distributeur (2) est configuré de manière à affecter les valeurs de commande de courant d'entrée, respectivement, aux convertisseurs, à partir de la valeur de commande de courant totale, à un rapport réciproque des taux de charge des accumulateurs électriques (10, 20) ; et

lorsque des courants d'entrée des accumulateurs électriques (10, 20) correspondent à des courants de décharge s'écoulant à partir des accumulateurs électriques, le distributeur (2) est configuré de manière à affecter les valeurs de commande de courant d'entrée, respectivement, aux convertisseurs (12, 22), à partir de la valeur de commande de courant totale, à un rapport des taux de charge des accumulateurs électriques (10, 20) ; et/ou

le distributeur (2) est configuré de manière à affecter, à un convertisseur correspondant à un accumulateur électrique présentant un taux de charge qui est devenu une valeur limite supérieure, une valeur de commande de courant d'entrée qui définit un courant limite pour une charge à zéro ; et

le distributeur (2) est configuré de manière à affecter, à un convertisseur correspondant à un accumulateur électrique présentant un taux de charge qui est devenu une valeur limite inférieure, une valeur de commande de courant d'entrée qui définit un courant limite pour une décharge à zéro.

**7.** Système de gestion d'accumulateurs électriques selon l'une quelconque des revendications 1 à 2, dans lequel :

la règle prédéfinie inclut une règle basée sur des tensions des accumulateurs électriques (10, 20) ; et

le distributeur (2) est configuré de manière à générer, à partir de la valeur de commande de courant totale, une pluralité de valeurs de commande de courant d'entrée affectée aux convertisseurs, selon des tensions des accumulateurs électriques, et il fournit les valeurs de commande de courant d'entrée, respectivement, aux convertisseurs.

**8.** Système de gestion d'accumulateurs électriques selon la revendication 7, lorsqu'elle dépend de la revendication 2, dans lequel :

lorsque des courants d'entrée des accumulateurs électriques correspondent à des courants de charge s'écoulant vers les accumulateurs électriques (10, 20), le distributeur (2) est configuré de manière à affecter les valeurs de commande de courant d'entrée, à partir de la valeur de commande de courant totale, respectivement, aux convertisseurs, à un rapport réciproque des tensions des accumulateurs électriques ; et

lorsque des courants d'entrée des accumulateurs électriques correspondent à des courants de décharge s'écoulant à partir des accumulateurs électriques, le distributeur (2) est configuré de manière à affecter les valeurs de commande de courant d'entrée, à partir de la valeur de commande de courant totale, aux convertisseurs, à un rapport des tensions des accumulateurs électriques ; et/ou

dans lequel, lorsqu'une tension d'au moins l'un des accumulateurs électriques atteint une tension prédéterminée, le distributeur (2) est configuré de manière à fournir une valeur de commande de courant d'entrée pour une charge à tension constante à un convertisseur correspondant à un accumulateur électrique présentant la tension prédéterminée, et le distributeur (2) est configuré de manière à distribuer la valeur de commande de courant totale à un convertisseur correspondant aux accumulateurs électriques, en excluant l'accumulateur électrique présentant la tension prédéterminée.

9. Système de gestion d'accumulateurs électriques selon l'une quelconque des revendications 1 à 2, dans lequel :

la règle prédéfinie inclut une règle basée sur une quantité de puissance de charge et de décharge totale, laquelle correspond à une valeur totale de quantités de puissance chargées au niveau des accumulateurs électriques (10, 20) ou à une valeur totale de quantités de puissance déchargées des accumulateurs électriques (10, 20) ; et le distributeur (2) est configuré de manière à générer, à partir de la valeur de commande de courant totale, une pluralité de valeurs de commande de courant d'entrée affectée aux convertisseurs (12, 22), selon la quantité de puissance de charge et de décharge totale, et le distributeur (2) est configuré de manière à fournir les valeurs de commande de courant d'entrée, respectivement, aux convertisseurs.

10. Système de gestion d'accumulateurs électriques selon l'une quelconque des revendications 1 à 2, dans lequel la règle prédéfinie inclut une règle basée sur des valeurs de courant tolérables des accumulateurs électriques (10, 20).

11. Système de gestion d'accumulateurs électriques selon l'une quelconque des revendications 1 à 2, dans lequel, lorsqu'au moins l'un des accumulateurs électriques (10, 20) est chargé à une tension constante, le distributeur (2) est configuré de manière à fournir, au convertisseur correspondant à l'accumulateur électrique chargé à la tension constante, une valeur de commande de courant d'entrée indiquant une valeur de courant constant ; et le distributeur (2) est configuré de manière à affecter une différence entre la valeur de commande de courant d'entrée fournie et la valeur de commande de courant totale, aux convertisseurs des accumulateurs électriques, en excluant l'accumulateur électrique chargé à la tension constante.

12. Système de gestion d'accumulateurs électriques selon l'une quelconque des revendications 1 à 2, dans lequel la règle prédéfinie inclut une règle basée sur des caractéristiques de température des accumulateurs électriques (10, 20).

13. Procédé de gestion d'accumulateurs électriques destiné à commander des courants d'entrée d'une pluralité d'accumulateurs électriques (10, 20), respectivement, avec une pluralité de convertisseurs (12, 22), dans lequel les courants d'entrée correspondent à au moins l'un parmi des courants de charge et des courants de décharge, le procédé comprenant les étapes ci-dessous consistant à :

calculer une valeur de commande de courant totale, laquelle correspond à la valeur de commande totale d'une pluralité de valeurs de commande de courant d'entrée, pour la pluralité d'accumulateurs électriques (10, 20) faisant l'objet de la gestion, dans lequel la valeur de commande de courant totale correspond à l'un parmi différents types de valeurs de commande de courant totales, et dans lequel l'étape de calcul inclut l'étape consistant à commuter les différents types de valeurs de commande de courant totales selon une fonction de commande demandée pour les accumulateurs électriques (10, 20) ,

affecter la pluralité de valeurs de commande de courant, à partir de la valeur de commande de courant totale calculée, aux convertisseurs (12, 22), selon une règle prédéfinie ; et

générer une pluralité de valeurs de commande de courant d'entrée indiquant respectivement les valeurs de commande de courant affectées, et fournir les valeurs de commande de courant d'entrée aux convertisseurs (12, 22), dans lequel la fonction de commande correspond à l'une parmi une pluralité de fonctions de commande qui incluent au moins deux fonctions parmi :

une fonction de commande de tension de sortie qui est configurée de manière à commander une tension de sortie des accumulateurs électriques (10, 20) afin qu'elle soit constante ;

une fonction de limitation de flux inverse qui est configurée de manière à limiter un flux inverse lorsque les accumulateurs électriques (10, 20) fonctionnent en coordination avec un bloc d'alimentation de système ;
une fonction de commande de charge à courant constant qui est configurée de manière à charger l'accumulateur électrique (10, 20) avec un courant constant ; et
une fonction de charge rapide qui est configurée de manière à commander une charge rapide de l'accumulateur électrique.

# Fig.1

EP 2 985 857 B1

Fig.2

```
          ┌─────────────┐
          │    START    │
          └──────┬──────┘
                 │       ┌──────────◄──┐
                 ▼     ~S10           NO │
        ◄────────────────────────►──────┘
        │  Stopping of storage   │
        │   battery detected?    │
        ◄────────────────────────►
              YES│      ~S11
          ┌──────▼──────────────────┐
          │Update distribution quantity│
          │ "n = n- stopped quantity" │
          └──────┬──────────────────┘
                 ▼
          ┌─────────────┐
          │     END     │
          └─────────────┘
```

Fig.3

```
          ┌─────────────┐
          │    START    │
          └──────┬──────┘
                 │       ┌──────────◄──┐
                 ▼     ~S20           NO │
        ◄────────────────────────►──────┘
        │   Abnormal storage     │
        │   battery detected?    │
        ◄────────────────────────►
              YES│      ~S21
          ┌──────▼──────────────────┐
          │Update distribution quantity│
          │ "n = n- stopped quantity" │
          └──────┬──────────────────┘
                 ▼
          ┌─────────────┐
          │     END     │
          └─────────────┘
```

# Fig.4

```
                    START

                    │
                    ▼              ~S30
         ┌──────────────────────┐
         │  Calculate SOC of    │
         │  each storage battery│
         └──────────────────────┘
                    │
                    ▼              ~S31
              ┌───────────────┐          NO
         ◁────┤Charging direction?├──────────────────────────────┐
              └───────────────┘                                   │
                    │ YES                                         │
                    ▼              ~S32                           ▼              ~S35
              ┌───────────────┐    NO                       ┌───────────────┐    NO
         ◁────┤ SOC not equal?├────────────┐           ◁────┤ SOC not equal?├────────────┐
              └───────────────┘            │                └───────────────┘            │
                    │ YES        ~S33       │  ~S34               │ YES      ~S36          │  ~S37
                    ▼                       ▼                     ▼                        ▼
         ┌──────────────────┐   ┌──────────────────┐   ┌──────────────────┐   ┌──────────────────┐
         │ Set large charging│  │Set equal charging│   │Set small discharging│ │Set equal charging│
         │ current for storage│ │current to each   │   │current for storage  │ │current to each   │
         │ battery having low SOC,│storage battery  │   │battery having low SOC,│ storage battery  │
         │ and set small charging│└──────────────────┘  │and set large discharging│└──────────────────┘
         │ current for storage│                         │current for storage  │
         │ battery having high SOC│                      │battery having high SOC│
         └──────────────────┘                           └──────────────────┘
                    │                     │                     │                       │
                    ▼                     │                     │                       │
                    ◁─────────────────────┴─────────────────────┴───────────────────────┘
                    │
                    ▼
                  END
```

## Fig.5

## Fig.6

## Fig.7

# Fig.8

START

↓ ~S40

Calculate SOC of each storage battery

↓ ~S41

Detect upper limit value of
SOC for storage battery? → NO

↓ YES ~S42

Set charging limit current of
storage battery that became SOC
upper limit value to "0"

↓ ~S43

Detect lower limit value of
SOC for storage battery? → NO

↓ YES ~S44

Set discharging limit current of
storage battery that became SOC
upper limit value to "0"

↓

END

# Fig.9

```
              ┌──────────────┐
              │    START     │
              └──────┬───────┘
                     │                    ~S50
          ┌──────────▼──────────┐
          │  Calculate storage  │
          │  battery voltage of │
          │ each storage battery│
          └──────────┬──────────┘
                     │                    ~S51
          ◁─────────────────────▷  NO ──────────────────────────────┐
            Discharging direction?                                   │
          └─────────┬───────────┘                                    │
                    │ YES         ~S52                               │    ~S55
          ◁─────────────────────▷  NO ──────┐          ◁────────────────────────▷  NO ──┐
            Storage battery                  │            Storage battery                 │
            voltage not equal?               │            voltage not equal?              │
          └─────────┬───────────┘            │          └──────────┬─────────┘           │
                    │ YES        ~S53         │  ~S54              │ YES      ~S56          │  ~S57
```

| Set large charging current for storage battery having low storage battery voltage, and set small charging current for storage battery having high storage battery voltage | Set equal charging current to each storage battery | Set small discharging current for storage battery having low storage battery voltage, and set large discharging current for storage battery having high SOC | Set equal charging current to each storage battery |

```
              ┌──────────────┐
              │     END      │
              └──────────────┘
```

EP 2 985 857 B1

# Fig.10

```
                    ┌─────────────┐
                    │    START    │
                    └──────┬──────┘
                           │         ◄──────────────────┐
                           ▼          ~S60               │
        ┌──────────────────────────────────────┐        │
        │    Detect storage battery voltage     │        │
        └──────────────────┬───────────────────┘        │
                           ▼          ~S61               │
              ╱─────────────────────────╲   NO           │
             ╱  Storage battery in constant ╲────────────┘
             ╲ voltage control region detected? ╱
              ╲─────────────────────────╱
                          │ YES
                          ▼          ~S62
        ┌──────────────────────────────────────┐
        │   Set storage battery in constant     │
        │      voltage control region to        │
        │       constant current control        │
        └──────────────────┬───────────────────┘
                           ▼          ~S63
        ┌──────────────────────────────────────┐
        │  Determine distribution factor        │
        │  and distribution destination,        │
        │  excluding storage battery in         │
        │  constant voltage control region      │
        └──────────────────┬───────────────────┘
                           ▼
                    ┌─────────────┐
                    │     END     │
                    └─────────────┘
```

35

# Fig.11

START
↓ ~S70

Calculate total charging
and discharging power
amount of each storage battery
↓ ~S71

Charging direction? ── NO ──────────────────────┐
↓ YES ~S72                                       ↓ ~S75

Total charging and          ── NO ──┐      Total charging and      ── NO ──┐
discharging power                    │     discharging power                │
amount not equal?                    │     amount not equal?                │
↓ YES ~S73                           │ ~S74 ↓ YES ~S76                      │ ~S77

Set large charging current    Set equal charging current   Set small discharging current   Set equal charging current
for storage battery having    to each storage battery       for storage battery having      to each storage battery
low total charging and                                       low total charging and
discharging power amount,                                    discharging power amount,
and set small charging                                       and set large discharging
current for storage battery                                  current for storage battery
having high total charging                                   having high total charging
and discharging power amount                                 and discharging power amount

END

EP 2 985 857 B1

# Fig.12

```
              ┌─────────────────┐
              │      START      │
              └─────────────────┘
                       │
                       ▼           ~S70
      ┌──────────────────────────────────┐
      │       Calculate total charging   │
      │        and discharging power     │
      │    amount of each storage battery│
      └──────────────────────────────────┘
                       │
                       ▼           ~S71
              ◁ Charging direction? ▷──── NO ────────────────────────────────────┐
                       │                                                          │
                     YES    ~S72                                                  ▼           ~S75
                       ▼                                           ◁ Total charging and ▷── NO ──┐
              ◁ Total charging and ▷── NO ──┐                      ◁ discharging power  ▷        │
              ◁ discharging power  ▷        │                      ◁ amount not equal?  ▷        │
              ◁ amount not equal?  ▷        │                               │                    │
                       │                    │                             YES    ~S76A            │
                     YES    ~S73A           ▼      ~S74                     ▼                      ▼       ~S77
```

| S73A | S74 | S76A | S77 |
|---|---|---|---|
| Set small charging current for storage battery having low total charging and discharging power amount, and set large charging current for storage battery having high total charging and discharging power amount | Set equal charging current to each storage battery | Set large discharging current for storage battery having low total charging and discharging power amount, and set small discharging current for storage battery having high total charging and discharging power amount | Set equal charging current to each storage battery |

```
              ┌─────────────────┐
              │      END        │
              └─────────────────┘
```

EP 2 985 857 B1

Fig.13

|  | Tolerable Current Value Data |
|---|---|
| Storage Battery Type A | x |
| Storage Battery Type B | y |
| Storage Battery Type C | z |
| . | . |
| . | . |
| . | . |
| Storage Battery Type n |  |

Fig.14

START

Specify storage battery type — S80

Read tolerable current value data — S81

Specify tolerable current value of each storage battery — S82

Determine distribution factor based on ratio of specified tolerable current value — S83

END

Fig.15

START

Determine number "x" of storage batteries subject to constant voltage control — S90

distributed number "z" = total storage battery number "n" − storage battery number "x" — S91

updated total current command value = total current command value prior to update − control current value for constant voltage control · x — S92

Updated total current command value distributed based on distributed number "z" — S93

END

# Fig.16

# Fig.17

Fig.18

# Fig.19

EP 2 985 857 B1

# Fig.20

EP 2 985 857 B1

# Fig.21

**EP 2 985 857 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007060796 A
- US 2011089760 A1
- GB 2465469 A
- FR 2797722 A1